# EUROPEAN PATENT APPLICATION

(11) **EP 2 937 796 A1**
(43) Date of publication of application: **28.10.2015**
(21) Application number: 15151802.4
(22) Date of filing: 20.01.2015
(51) Int. Cl.: G06F 17/30

(54) **Information processing terminal, display terminal, and display method**

(30) Priority: 28.03.2014 JP 2014069150
(71) Applicant: FUJITSU LIMITED, Kawasaki-shi, Kanagawa 211-8588 (JP)
(72) Inventor: ITAKURA, Kota, Kawasaki-shi, Kanagawa 211-8588 (JP); MURAKAWA, Yoshihiko, Kawasaki-shi, Kanagawa 211-8588 (JP); FUJII, Akira, Kawasaki-shi, Kanagawa 211-8588 (JP); YASUKAWA, Yusuke, Kawasaki-shi, Kanagawa 211-8588 (JP)
(74) Representative: Cooper-Rolfe, Elizabeth Louise

(57) **Abstract**

An information processing terminal connectable to a display terminal through a network is disclosed, and the information processing terminal includes: a display control unit that causes the display terminal to display an image in which a display state is changed in response to a manipulation by a user; a first creating unit that creates command definition information for causing the display terminal to notify the information processing terminal an occurrence of a manipulation on the image when the image is displayed by the display terminal; and a transmitting unit that transmits, to the display terminal, the command definition information and data for indicating the display state of the image to be changed in response to the manipulation.

## Description

### FIELD

The embodiments discussed herein relate to an information processing terminal, a display terminal, a display method, and a non-transitory storage medium that stores a program.

### BACKGROUND

Mobile terminals such as smartphones and tablet terminals offer excellent portability and enable a user to easily view web contents in a location where network connectability is possible. However, the screen of a mobile terminal is too small to allow for more than one person to view the mobile terminal screen at the same time.

The ability to display web contents to be displayed on a mobile terminal on a display terminal having a large display such as a smart table or a digital signage apparatus would be convenient when more than one person wishes to view the web contents. Alternatively, viewability of the web contents could be improved if the web contents to be displayed on a mobile terminal could be displayed on a display terminal even when one person is viewing the web contents.

International Publication Pamphlet No. WO 2008/078684, Japanese Laid-open Patent Publication No. 2009-289205, Japanese Laid-open Patent Publication No. 2008-191929, Japanese Laid-open Patent Publication No. 2005-242682, and Japanese Laid-open Patent Publication No. 2007-87303 are examples of related art.

The transfer of web contents as-is to a display terminal has been considered as a method for displaying the web contents displayed on a mobile terminal on a display terminal.

However in these cases, it is difficult to synchronize changes in the display state of the web contents in accordance with a manipulation by a user on the mobile terminal or the display terminal in the other terminal.

This is because whereas the changes in the display state of the web contents are implemented based on JavaScript (registered trademark) and the like that configures the web contents, the execution of a script in one of the terminals does not affect the other terminal.

Embodiments of the present invention seek to synchronize display states of display data in a plurality of terminals.

### SUMMARY

According to an aspect of the invention, an information processing terminal connectable to a display terminal through a network is disclosed, and the information processing terminal includes: a display control unit that causes the display terminal to display an image in which a display state is changed in response to a manipulation by a user; a first creating unit that creates command definition information for causing the display terminal to notify the information processing terminal an occurrence of a manipulation on the image when the image is displayed by the display terminal; and a transmitting unit that transmits, to the display terminal, the command definition information and data for indicating the display state of the image to be changed in response to the manipulation.

### BRIEF DESCRIPTION OF DRAWINGS

FIG. 1 illustrates a system configuration example according to first embodiment;
FIG. 2 illustrates an example of a display image of web contents in an integrated display;
FIG. 3 illustrates a hardware configuration example of a mobile terminal according to the first embodiment;
FIG. 4 illustrates a functional configuration example of a mobile terminal and a display terminal according to the first embodiment;
FIG. 5 is a view for explaining the relationship between HTML, DOM, CSS and a script;
FIG. 6 is a sequence diagram for explaining an example of operating procedures executed in response to the download of web contents;
FIG. 7 is a sequence diagram for explaining an example of operating procedures executed in response to the reading of a synchronized data distribution script in the mobile terminal;
FIG. 8 illustrates examples of DOM data and style definition data;
FIG. 9 illustrates an example of the creation of an event notification script based on an event handler;
FIG. 10 is a view for explaining display position information;
FIG. 11 is a sequence diagram for explaining an example of operating procedures executed in response to a manipulation by a user on an image displayed based on the web contents;
FIG. 12 illustrates an example of difference data;
FIG. 13 is a flow chart for explaining an example of operating procedures for web contents rendering processing by a mobile terminal;
FIG. 14 is a flow chart for explaining an example of operating procedures executed by the mobile terminal in response to the reading of the synchronized data distribution script;
FIG. 15 is a flow chart for explaining an example of operating procedures for initial information creation processing;
FIG. 16 is a flow chart for explaining an example of operating procedures for event standby processing;
FIG. 17 is a flow chart for explaining an example of operating procedures for executing the synchronized data distribution script in the display terminals;
FIG. 18 is a flow chart for explaining an example of operating procedures for executing the event notification script in the display terminals;
FIG. 19 is a view for explaining a same creator policy;
FIG. 20 illustrates examples of display images of images in the terminals according to the first method of the second embodiment;
FIG. 21 illustrates an example of image rendering according to a second method of the second embodiment;
FIG. 22 is a flow chart for explaining an example of operating procedures for style definition extraction processing according to the second method in the second embodiment;
FIG. 23 illustrates a functional configuration example of a mobile terminal and a display terminal according to a third embodiment;
FIG. 24 is a view for explaining a mechanism of the third embodiment;
FIG. 25 illustrates a functional configuration example of a mobile terminal and a display terminal according to a fourth embodiment;
FIG. 26 is a view for explaining a mechanism of the fourth embodiment;
FIG. 27 is a flow chart for explaining an example of operating procedures executed by a smart table according to a fifth embodiment;
FIG. 28 illustrates an example of synchronization between a display state of a mobile terminal and a display state of a smart table; and
FIG. 29 is a flow chart for explaining an example of operating procedures executed by a mobile terminal according to the fifth embodiment.

### DESCRIPTION OF EMBODIMENTS

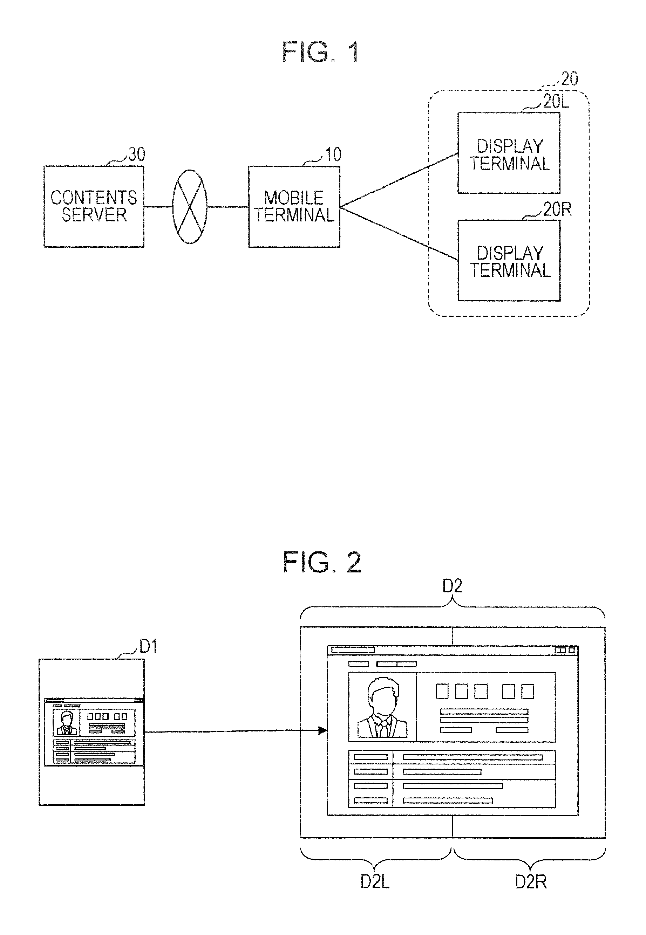

Embodiments of the present disclosure will be explained with reference to the drawings. FIG. 1 illustrates a system configuration example according to a first embodiment. A mobile terminal 10 in FIG. 1 is connectable to one or more contents servers 30 through a network such as the Internet or a local area network (LAN). The mobile terminal 10 is also connectable to two display terminals 20, a display terminal 20L and a display terminal 20R, through the network. Communication between the mobile terminal 10 and the contents server 30 or between the mobile terminal 10 and the display terminals 20 may be performed by using a mobile communication network, a wireless LAN, or by near field wireless communication.

The mobile terminal 10 is a portable terminal such as a mobile telephone, a smartphone, or a tablet terminal and the like. The mobile terminal 10 has functions for downloading (acquiring) web contents from the contents server 30 and displaying the web contents. The web contents are display data that can be viewed by a typical Web browser. The web contents include hypertext markup language (HTML), cascading style sheets (CSS), and scripts and the like. The CSS and the script may be defined in a file different from the HTML file or may be included within the HTML. The script is, for example, JavaScript (registered trademark). A display state of the web contents may be made dynamic with the script. That is, the display state of the web contents can be changed by the script in response to the occurrence of different types of events without downloading a new script (without transferring the web contents). The display state of the web contents refers to a display state of an image (screen) displayed based on the web contents. Examples of different types of events include a manipulation by a user on the image displayed based on the web contents. How the display state of the web contents changes in response to an event depends upon definitions in the web contents. The web contents may also be called web applications or web pages.

The contents server 30 is a computer that receives, in response to a web contents download request from the mobile terminal 10, web contents corresponding to a uniform resource locator (URL) specified in the request. Web contents previously stored in the mobile terminal 10 may also be displayed.

The display terminals 20 are terminals having a large display such as a smart table, a digital signage apparatus, or a wall-mounted display and the like. The display terminals 20 have functions for displaying web contents. In a first embodiment, an example will be described in which one display (hereinbelow referred to as an "integrated display") is provided having two times the display region of the display of the display terminal 20 to a user by placing the displays of the display terminals 20 beside each other. The web contents displayed by the mobile terminal 10 is displayed across the left and right displays of both of the display terminals 20 in the integrated display.

FIG. 2 illustrates an example of a display image of web contents in an integrated display. A display D1 in FIG. 2 is the display of the mobile terminal 10. A display D2L is the display of the display terminal 20L. A display D2R is the display of the display terminal 20R. As illustrated in FIG. 2, the image displayed in the display D1 is displayed across two displays in the integrated display D2 configured by the display D2L and the display D2R.

Three or more displays of the display terminals 20 may be integrated. In this case, the display terminals 20 may be arranged in the vertical direction as well as the horizontal direction. For example, if four display terminals 20 are combined, a configuration may be used in which integrated displays D2 illustrated in FIG. 2 are arranged in the vertical direction.

Moreover, the entire image displayed in the mobile terminal 10 may be displayed in each of the display terminals 20. In other words, the display terminals 20 may each display the same image. In this case, a one-to-one relationship may be demonstrated between the mobile terminal 10 and the display terminals 20.

The display terminals 20 in the present embodiment have a unit for receiving a manipulation of the web contents by a user. For example, the display terminals 20 may each be provided with a touch panel. Therefore, the web contents can also be manipulated on the display terminals 20. The manipulation of the web contents refers to the manipulation of an image displayed based on the web contents.

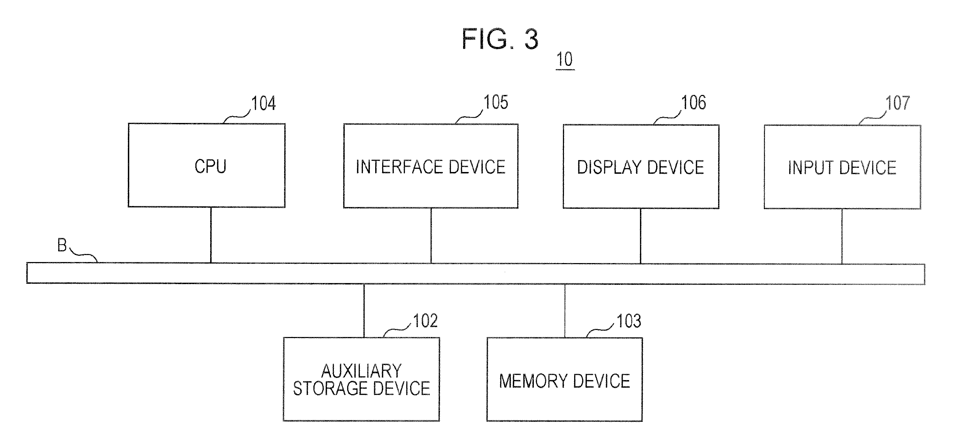

FIG. 3 illustrates a hardware configuration example of the mobile terminal according to the first embodiment. The mobile terminal 10 in FIG. 3 has an auxiliary storage device 102, a memory device 103, a CPU 104, an interface device 105, a display device 106, and an input device 107 all interconnected through a bus B.

Programs for implementing processing in the mobile terminal 10 are installed in the auxiliary storage device 102. The auxiliary storage device 102 stores installed programs as well as desired files and data and the like.

The memory device 103 reads out and stores the programs from the auxiliary storage device 102 when there is an activation instruction for a program. The CPU 104 implements functions related to the mobile terminal 10 according to the programs stored in the memory device 103. The interface device 105 is used as an interface for connecting to a network. The display device 106 is provided with the display D1 and displays images and the like based on the web contents. The input device 107 is a button or a touch panel and the like and receives manipulation instructions from the user.

The display terminals 20 may also have the same hardware as illustrated in FIG. 3.

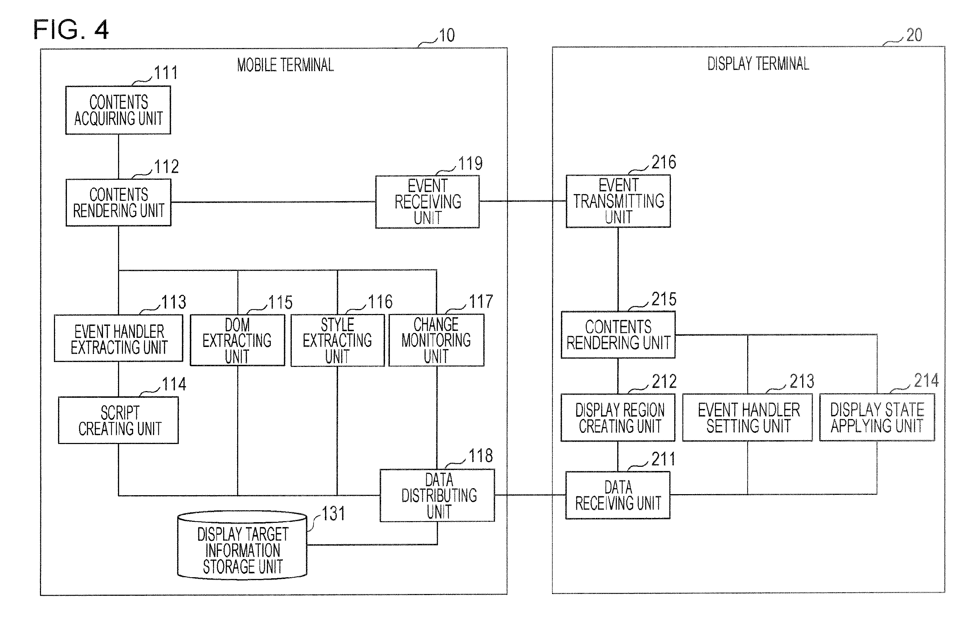

FIG. 4 illustrates a functional configuration example of a mobile terminal and a display terminal according to the first embodiment. The mobile terminal 10 in FIG. 4 has a contents acquiring unit 111, a contents rendering unit 112, an event handler extracting unit 113, a script creating unit 114, a DOM extracting unit 115, a style extracting unit 116, a change monitoring unit 117, a data distributing unit 118, and an event receiving unit 119 and the like. The units are implemented by processing to cause the CPU 104 to execute one or more programs installed or downloaded in the mobile terminal 10. The mobile terminal 10 also has a display target information storage unit 131. The display target information storage unit 131 may be achieved, for example, by using the auxiliary storage device 102. "DOM" is an abbreviation for "document object model."

The contents acquiring unit 111 acquires the web contents from the contents server 30. The contents rendering unit 112 executes rendering processing on the acquired web contents. The rendering processing involves analyzing HTML and CSS files and executing scripts defined in script files. A DOM tree is created due to the analysis of the HTML files and is stored in the memory device 103. A DOM tree is an object group for maintaining the current state (structure) of the web contents, and functions as an application program interface (API) for each element in the HTML.

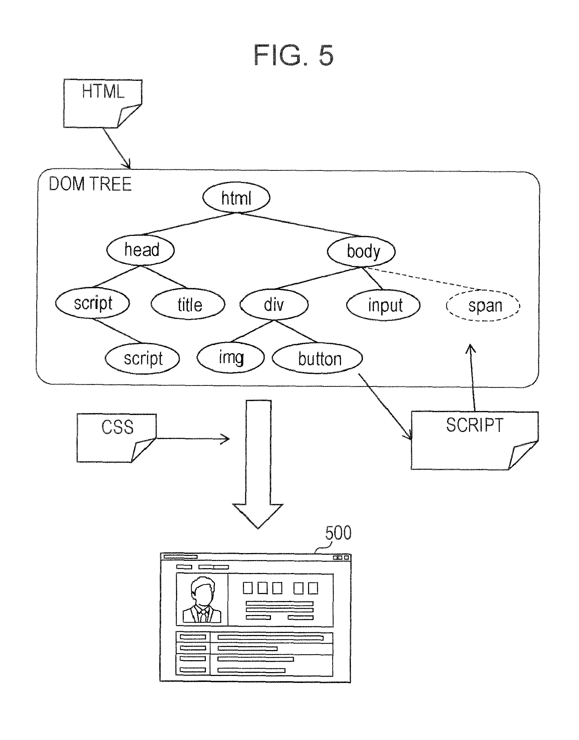

FIG. 5 is a view for explaining the relationship between HTML, DOM, CSS and a script. The DOM tree displayed in FIG. 5 is initialized by the HTML. That is, a HTML file downloaded from the contents server 30 stores the initial state of the image displayed based on the web contents. If the display state of the image changes in response to a manipulation and the like of the image by a user, the changed display state is maintained in the DOM tree. In other words, the change of the display state of the web contents is implemented through a change in the DOM element tree. The elements that configure the DOM tree are referred to as DOM elements.

The CSS represents definitions relating to the placement and modification of the DOM elements. An image 500 is displayed due to the CSS being applied to the DOM tree. The script is able to detect a manipulation of a DOM element and rewrite the DOM tree.

The contents acquiring unit 111 and the contents rendering unit 112 may be implemented, for example, by a typical web browser program being executed by the CPU 104.

The event handler extracting unit 113 extracts event handlers from the script that configures the web contents. The script creating unit 114 creates a script

(hereinbelow referred to as "event notification script") defined so as to cause the display terminal 20 that is the display target of the web contents to notify the mobile terminal 10 when an event to be monitored by the extracted event handler has occurred. The event notification script is distributed to the display terminals 20 to cause the display terminals 20 to function as event transmitting units 216.

The DOM extracting unit 115 creates data (hereinbelow referred to as "DOM data") in which the DOM tree loaded into the memory device 103 is stringized. The style extracting unit 116 creates data (hereinbelow referred to as "style definition data") in which a style definition loaded into the memory device 103 due to the analysis of the CSS file is stringized. The change monitoring unit 117 monitors changes in the DOM elements that configure the DOM tree.

The data distributing unit 118 distributes, to the display terminals 20, the event notification script created by the script creating unit 114, the DOM data created by the DOM extracting unit 115, and the style definition data created by the style extracting unit 116. If a change in the DOM tree is detected by the change monitoring unit 117, the data distributing unit 118 also distributes, to the display terminals 20, data (hereinbelow referred to as "difference data") indicating the difference in the DOM tree before and after the change. However, DOM data in which the entire DOM tree after the change is stringized may be distributed in place of the difference data.

The event receiving unit 119 receives notifications of the occurrence of events transmitted by the display terminals 20 based on the event notification script. The DOM tree in the mobile terminal 10 is changed based on this notification.

The event handler extracting unit 113, the script creating unit 114, the DOM extracting unit 115, the style extracting unit 116, the change monitoring unit 117, the data distributing unit 118, and the event receiving unit 119 in the present embodiment are implemented by processing which involves a script being executed by the CPU 104. This script is referred to hereinbelow as a "synchronized data distribution script".

The display terminal 20 has a data receiving unit 211, a display region creating unit 212, an event handler setting unit 213, a display state applying unit 214, a contents rendering unit 215, and the event transmitting unit 216. The units are implemented by processing which involves programs installed in the display terminal 20 or programs distributed to the display terminal 20 being executed by a CPU in the display terminals 20.

The data receiving unit 211 receives data distributed from the mobile terminal 10. For example, the data receiving unit 211 receives the DOM data, the style definition data, and script data. If the DOM tree in the mobile terminal 10 is changed, the difference data may be received by the data receiving unit 211.

The display region creating unit 212 creates a display region of the image based on the web contents. The event handler setting unit 213 sets the event notification script received by the data receiving unit 211 in relation to the display region. The display state applying unit 214 applies the DOM data, the style definition data, and the difference data received by the data receiving unit 211 to the display region. The image is displayed in the display region due to the application of the DOM data and the style definition data. The display state of the image is changed due to the application of the difference data.

The contents rendering unit 215 basically implements functions similar to those of the contents rendering unit 112 in the mobile terminal 10. The event transmitting unit 216 transmits, to the mobile terminal 10, the notification of an event indicating a manipulation of the image displayed in the display region in response to the manipulation.

The data receiving unit 211, the display region creating unit 212, the event handler setting unit 213, and the display state applying unit 214 are implemented by processing involving a script being executed by the CPU in the display terminal 20. This script is referred to hereinbelow as a "synchronized data reception script". The synchronized data reception script is installed beforehand in the display terminal 20 for example.

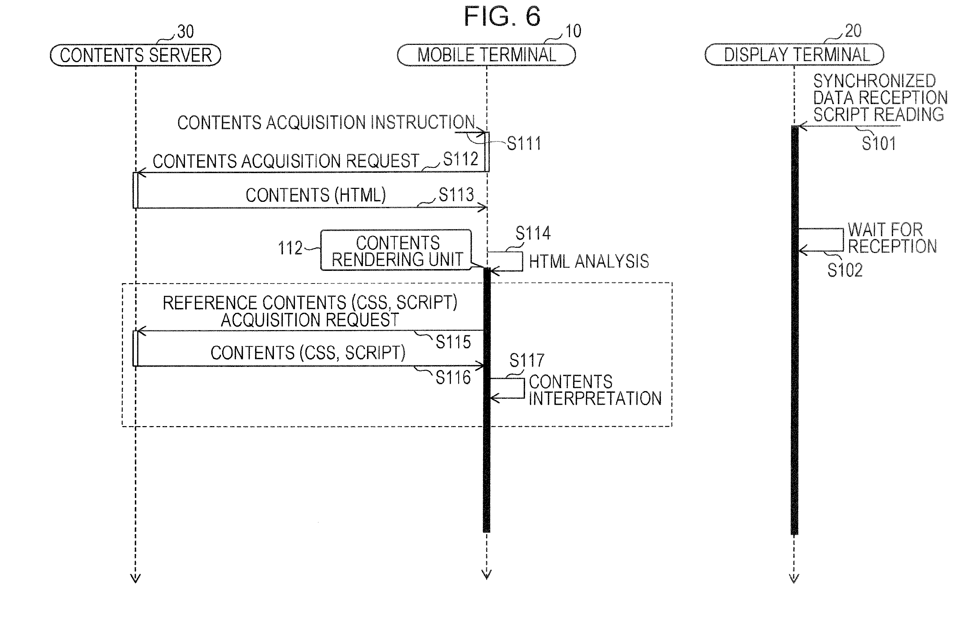

Operating procedures executed by the mobile terminal 10 and the display terminals 20 will be described hereinbelow. FIG. 6 is a sequence diagram for explaining an example of operating procedures executed in response to the download of web contents.

The display terminal 20 reads the synchronized data reception script in response to, for example, an activation or a certain manipulation by the user (S101). The data receiving unit 211 then waits to receive the data from the mobile terminal 10 based on the synchronized data reception script (S102).

Meanwhile, when a web contents acquisition instruction is inputted by a user on the mobile terminal 10 (S111), the contents acquiring unit 111 of the mobile terminal 10 transmits a web contents acquisition request to the URL designated in the acquisition instruction (S112). The contents server 30 transmits a response including the HTML file specified in the URL to the contents acquiring unit 111 (S113). The contents acquiring unit 111 receives the HTML file.

The contents rendering unit 112 then analyzes (parses) the definition contents of the HTML file and creates a DOM tree that indicates the configuration (display configuration) of the display elements defined in the HTML file (S114). The DOM tree is stored in the memory device 103. The contents rendering unit 112 transmits, to the contents server 30, an acquisition request for the contents (hereinbelow referred to as "reference contents") referenced by the HTML file in accordance with the progression of the analysis of the HTML file (S115). The reference contents include, for example, a CSS file and a script file and the like. The contents server 30 then transmits the requested contents (S116). The contents rendering unit 112 then interprets the transmitted CSS file and script file (S117). For example, a layout (arrangement positions) of the display elements indicated by the DOM tree is specified based on the CSS file. Still image contents and moving image contents and the like may be included in the reference contents.

Steps S115 to S117 are repeated for each piece of reference contents. When steps S115 to S117 are executed for all of the reference contents, an image based on the web contents configured by the HTML file and the reference contents is displayed on the display device 106 of the mobile terminal 10. The information read into the memory device 103 for displaying the web contents is referred to hereinbelow as "contents display information". The DOM tree, style definitions, and script definitions and the like are included in the contents display information. A style definition is a definition relating to the layout of the display elements indicated by the DOM tree, and is read from the CSS file. A script definition, which is read from a script file, is a definition pertaining to a script.

The steps S111 to S117 may be the same as operating procedures executed by a typical web browser until the web contents are displayed.

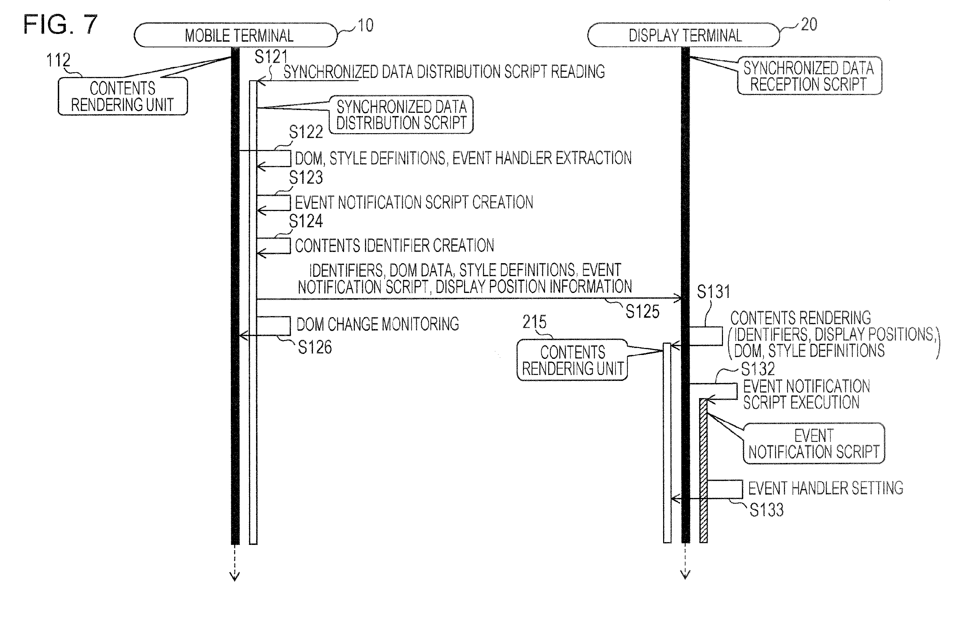

Processing in FIG. 7 is executed at any time after the processing in FIG. 6 is finished. FIG. 7 is a sequence diagram for explaining an example of operating procedures executed in response to the reading of a synchronized data distribution script by the mobile terminal.

The CPU 104 in step S121 reads the synchronized data distribution script from the memory device 103. The synchronized data distribution script is stored beforehand, for example, in the auxiliary storage device 102. The reading of the synchronized data distribution script may be executed in response to, for example, a manipulation of the mobile terminal 10. The white outlined axis associated with the mobile terminal 10 and extending downward from step S121 in FIG. 7 corresponds to the implementation of the event handler extracting unit 113, the script creating unit 114, the DOM extracting unit 115, the style extracting unit 116, the change monitoring unit 117, the data distributing unit 118, and the event receiving unit 119 due to the synchronized data distribution script being executed by the CPU 104.

The DOM data, the style definition, and the event handler are extracted from the contents display information managed by the contents rendering unit 112 in step S122. The DOM data represents the stringized DOM tree in the memory device 103 and is extracted by the DOM extracting unit 115. The style definition data represents the stringized style definition in the memory device 103, and is extracted by the style extracting unit 116. The event handler is extracted by the event handler extracting unit 113 from the script definition that configures the contents display information. The event handler represents processing to be executed in response to the occurrence of an event as defined by the script.

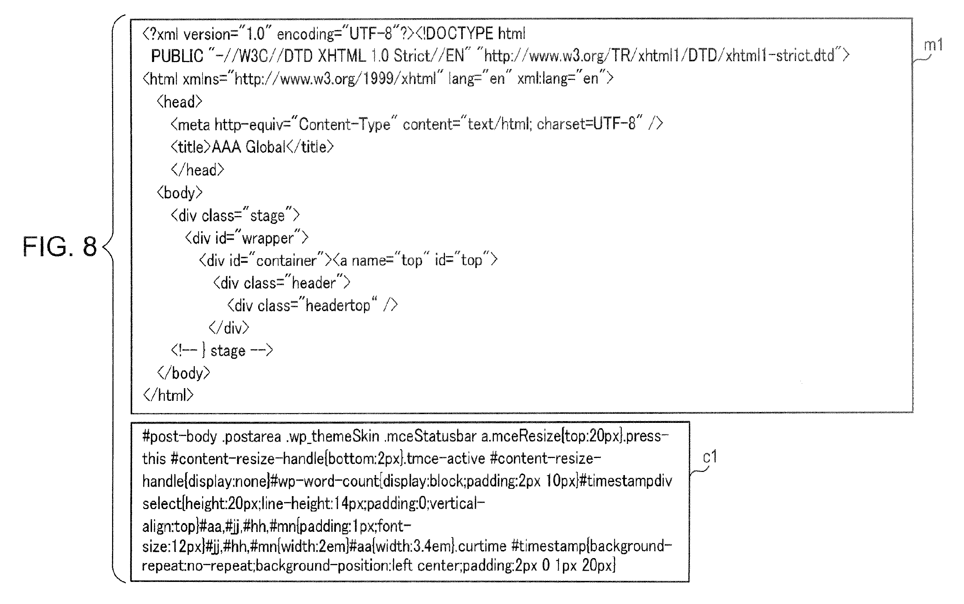

FIG. 8 illustrates examples of DOM data and style definition data. DOM data m1 and style definition data c1 are illustrated in FIG. 8. The DOM data m1 is written in the HTML format as can be seen in FIG. 8. The style definition data c1 is written in the CSS format. Therefore, the DOM data m1 and the style definition data c1 assume data formats that can be interpreted by a typical web browser.

The script creating unit 114 then creates an event notification script based on the extracted event handier (S123). The event notification script, which is used in the display terminals 20, refers to a script defined so that a notification about the occurrence of a monitored event in response to the detection of that event is sent to the mobile terminal 10. That is, when an event corresponding to a defined event handler in relation to the web contents occurs in the display terminal 20, the processing for notifying the mobile terminal 10 about the occurrence of the event is executed instead of the processing initially defined in relation to the event handler.

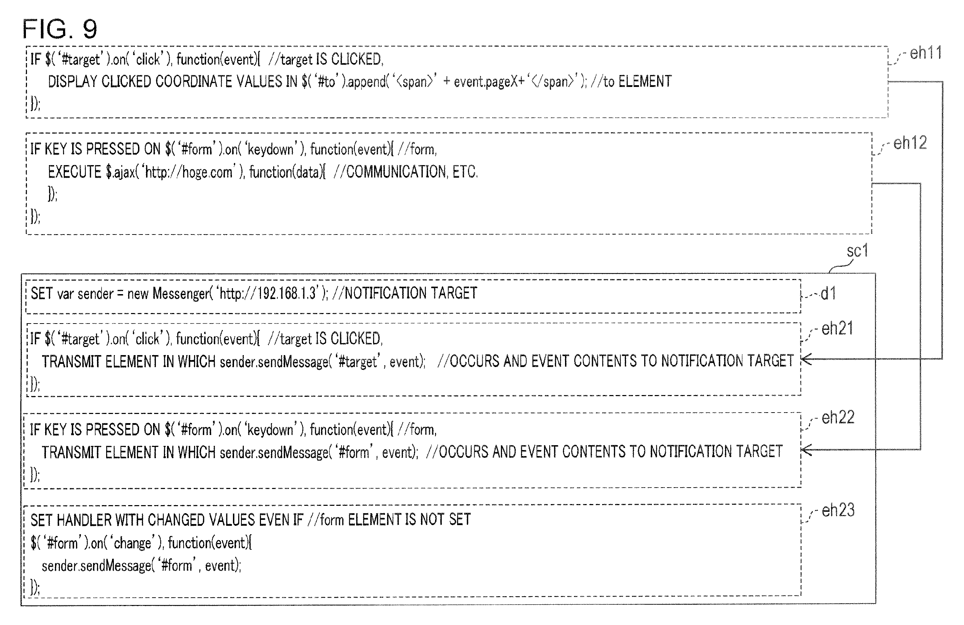

FIG. 9 illustrates an example of the creation of an event notification script based on an event handler. Extracted event handlers eh11 and eh12 and an event notification script sc1 created based on the event handlers are illustrated in FIG. 9. The definition contents of the event handlers eh11 and eh12 are merely provided for convenience.

The definition contents of the event handler eh11 indicate that "if 'target' is clicked, display clicked coordinate values in 'to' element". The definition contents of the event handler eh12 indicate that "if a key is pressed on 'form', execute communication".

The event notification script sc1 includes an event handler eh21 based on the event handler eh11 and an event handler eh22 based on the event handler eh12. The definition contents of the event handler eh21 indicates that "if 'target' is clicked, transmit element in which event occurs and contents of event to notification target". The definition contents of the event handler eh22 indicates that "if a key is pressed on the 'form', transmit element in which event occurs and contents of event to notification target". In this way, the event handlers for notifying the notification target about the occurrence of an event monitored by the event handler for each event handler extracted from the script definition, are included in the event notification script sc1.

A definition d1 relating to the notification target is included in the event notification script sc1. The URL of the notification target (sender) is set in the definition d1. The URL corresponds to the mobile terminal 10 in the present embodiment.

An event handler eh23 for an element not set by the event handler among the 'form' elements is further included in the event notification script sc1. The definition contents of the event handler eh23 indicates "transmit event pertaining to the element to the notification target". The event handler eh23 reflects, for example, the input of one letter in a text box in the form of the web contents displayed by the display terminals 20, in the display state of the mobile terminal 10.

The data distributing unit 118 then creates a contents identifier (S124). Hypothetically, when the display terminals 20 display web contents in a row from each of a plurality of mobile terminals 10, the contents identifier represents identification information for enabling the display terminals 20 to identify a correspondence relation between the web contents and the mobile terminals 10. That is, web contents displayed on a plurality of mobile terminals 10 may be displayed by the display terminals 20 at the same time. In this case, one group of web contents may be displayed in the foremost screen and another group of web contents may be hidden therebehind in the display terminals 20.

The data distributing unit 118 then distributes the contents identifier, the DOM data m1, the style definition data c1, the event notification script sc1, and the display position information and the like to the display terminals 20 (S125). The same contents identifier, the same DOM data m1, the same style definition data c1, and the same event notification script sc1 are transmitted to the display terminals 20. The display position information is information that indicates display positions and sizes in the display region in which the image is displayed based on the web contents in the display terminals 20. The display position information includes, for example, the upper left apex in the display region, the width, and the height. The web contents display information is different in each display terminal 20. In other words, the integrated display D2 can be implemented by differentiating the display positions in the display terminals 20. Therefore, the display position information is different in each display terminal 20. The display position information is associated with identification information such as the address information of the display terminal 20, for example, and stored in the display target information storage unit 131.

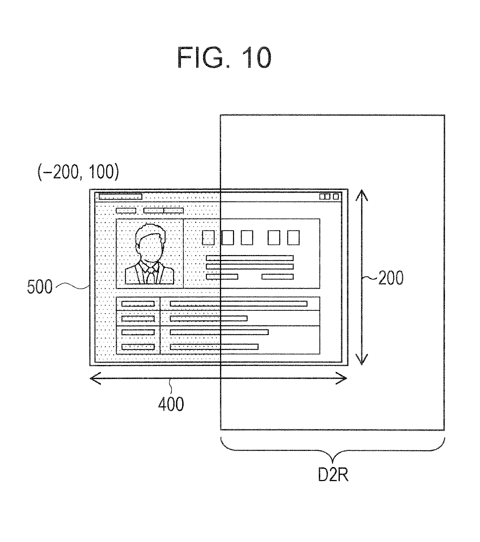

FIG. 10 is a view for explaining display position information. The display D2R illustrated in FIG. 2 is illustrated in FIG. 10. That is, an example of the display position information transmitted to the display terminal 20R is illustrated in FIG. 10. The display position information includes the upper left apex coordinates (-200, 100) and a width of 400 and a height of 200. Due to the upper left apex coordinates being outside of the coordinate system in the display D2R, the left half portion of the image 500 is not displayed on the display D2R. As a result, the right half portion of the image 500 is displayed on the display D2R. The display position is determined with the same principle so that the left half portion of the image 500 is displayed on the display D2L. Therefore, by aligning the display position information, the entire image 500 can be displayed on the display terminals 20. The display position may be determined so that portions of the image displayed on the display terminals 20 overlap each other.

The DOM data m1 transmitted in step S125 indicates a current display state of the web contents in the mobile terminal 10. Therefore, if the display state is changed, the contents of the DOM data m1 differs from the definition contents of the initially downloaded HTML file in the web contents. That is, the DOM data m1 and not the HTML file is transmitted to the display terminals 20 in order to reproduce the current display state. Conversely, the style definition data includes fixed or static information. Therefore, the initially downloaded style definition data may be transmitted as-is to the display terminals 20.

Next, the change monitoring unit 117 monitors changes in the DOM tree in the memory device 103. Changes to the DOM tree occur due to changes in the display state of the web contents. In other words, the display state of the web contents is changed due to the DOM tree being changed. Therefore it can be understood that the change monitoring unit 117 also monitors the changes in the display state of the web contents.

Meanwhile, the data receiving unit 211 of the display terminals 20 receives the contents identifier, the DOM data m1, the style definition data c1, the event notification script sc1, and the display position information and the like transmitted from the data distributing unit 118. The contents rendering unit 215 is then requested to render the web contents. The contents identifier, the display position information, the DOM data m1, and the style definition data c1 are included in the request (S131). The contents rendering unit 215 executes the same analysis processing as the contents rendering unit 112 based on the DOM data m1 and the style definition c1 in the display region of the position and size indicated in the display position information. As a result, the image based on the web contents is displayed on the displays of the display terminals 20. That is, the image 500 displayed on the mobile terminal 10 is displayed on the display terminals 20. However, the portions of the image 500 displayed on the display terminals 20 may differ in accordance with the display position information. The contents rendering unit 215 associates the contents identifier with the DOM tree created in the memory device based on the DOM data m1.

The event handler setting unit 213 then executes the event notification script sc1 (S132). As a result, the event handlers included in the event notification script sc1 are set in the contents rendering unit 215 (S133).

The mobile terminal 10 and the display terminals 20 then wait for the occurrence of an event. For example, the terminals wait for a manipulation by the user.

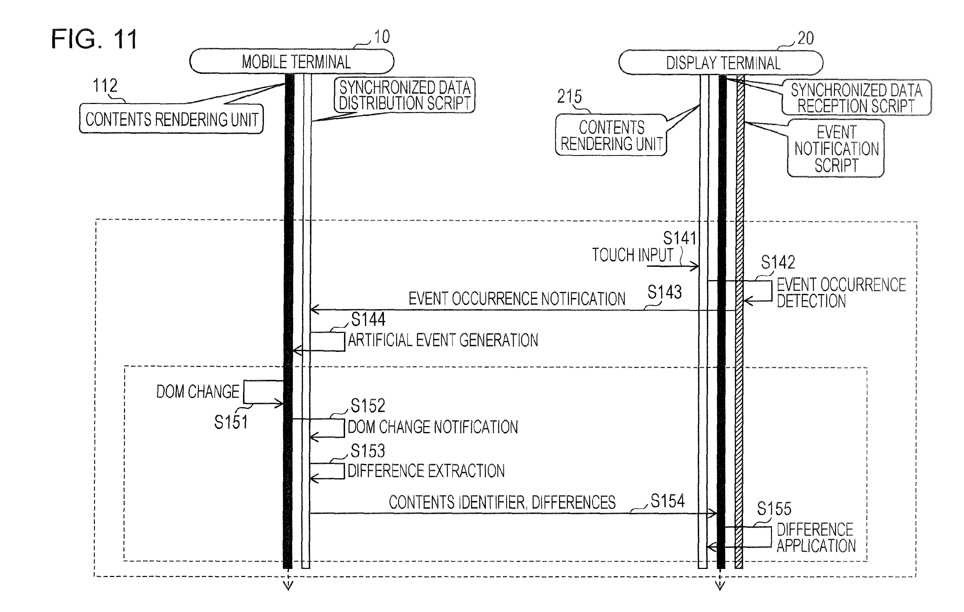

Operating procedures executed in response to a manipulation by the user on the image displayed based on the web contents will be described next. FIG. 11 is a sequence diagram for explaining an example of operating procedures executed in response to a manipulation by a user on an image displayed based on the web contents.

When the displayed image is manipulated due to any of the displays (touch panels) of the display terminals 20 being touched for example (S141), the contents rendering unit 215 initiates the event corresponding to the manipulation (S142). The event is detected (captured) by the event handler corresponding to the event. In response to the detection of the event, the event transmitting unit 216 transmits, to the notification target (the mobile terminal 10), an event occurrence notification that includes information indicating the DOM elements subject to the event and the type of event based on the definition of the event handler (S143). The event receiving unit 119 in the mobile terminal 10 receives the event occurrence notification. The change monitoring unit 117 artificially generates the event notified in the event occurrence notification upon detecting the reception of the event occurrence notification (S144). The contents rendering unit 112 is notified about the artificially initiated event.

The contents rendering unit 112 changes the DOM tree based on the definition of the event handler corresponding to the artificially initiated event among the event handlers included in the script definition (S151). The change of the DOM tree is detected by the change monitoring unit 117 (S152). The change monitoring unit 117 extracts the difference data including the information that indicates the differences in the DOM tree before and after the change (S153).

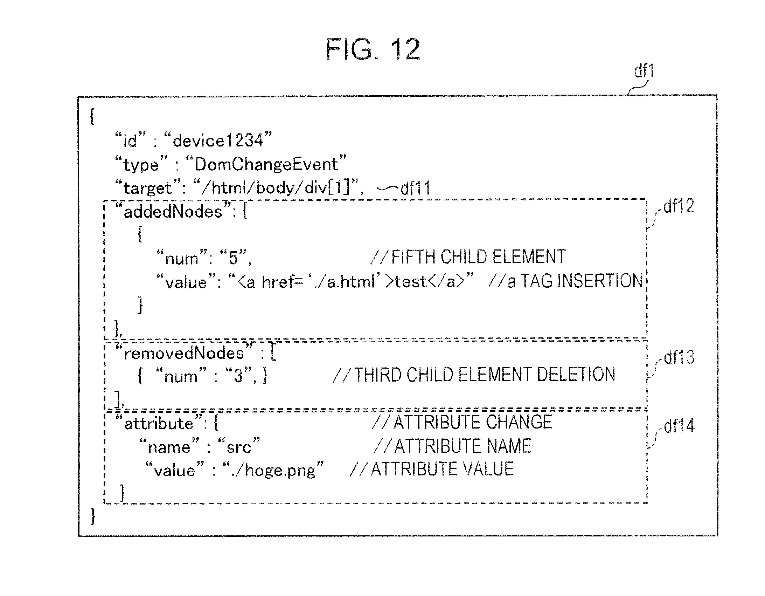

FIG. 12 illustrates an example of difference data. A description df11 in difference data df1 illustrated in FIG. 12 indicates an element to be changed (hereinbelow referred to as "target element"). A description df12 indicates that an "a" tag is inserted as a child element of the fifth target element. A description df13 indicates that a child element of the third target element is deleted. A description df14 indicates that the value of a "src" attribute of the target element is changed to "./hoge.png".

The data distributing unit 118 then distributes, to the display terminals 20, the contents identifier and the difference data df1 corresponding to the web contents in which the DOM tree is changed (S154). The data receiving unit 211 of the display terminals 20 receives the contents identifier and the difference data df1.

The display state applying unit 214 then applies the contents identifier and the difference data df1 to the contents rendering unit 215 (S155). The contents rendering unit 215 changes the DOM tree associated with the contents identifier based on the difference data df1. As a result, the display state in the display terminals 20 is also changed.

The steps S141 to S155 are executed whenever the image is manipulated on the display terminals 20 side. Therefore, the display state in the mobile terminal 10 and the display state in the display terminals 20 are changed in response to a manipulation on the display terminals 20 side. The steps S151 to S155 are executed in the mobile terminal 10 whenever the image is manipulated. That is, when an actual event and not an artificial event occurs, step S151 and the subsequent steps are executed by the mobile terminal 10 in response to the actual event. Therefore, the display state in the mobile terminal 10 and the display state in the display terminals 20 are changed in response to a manipulation on the mobile terminal 10 side. In this way, the display state can be synchronized in the present embodiment between all of the terminals even when the mobile terminal 10 or either of the display terminals 20 are manipulated.

Processing executed by the mobile terminal 10 and the display terminals 20 will be described next in further detail. Processing executed by the mobile terminal 10 will be described first.

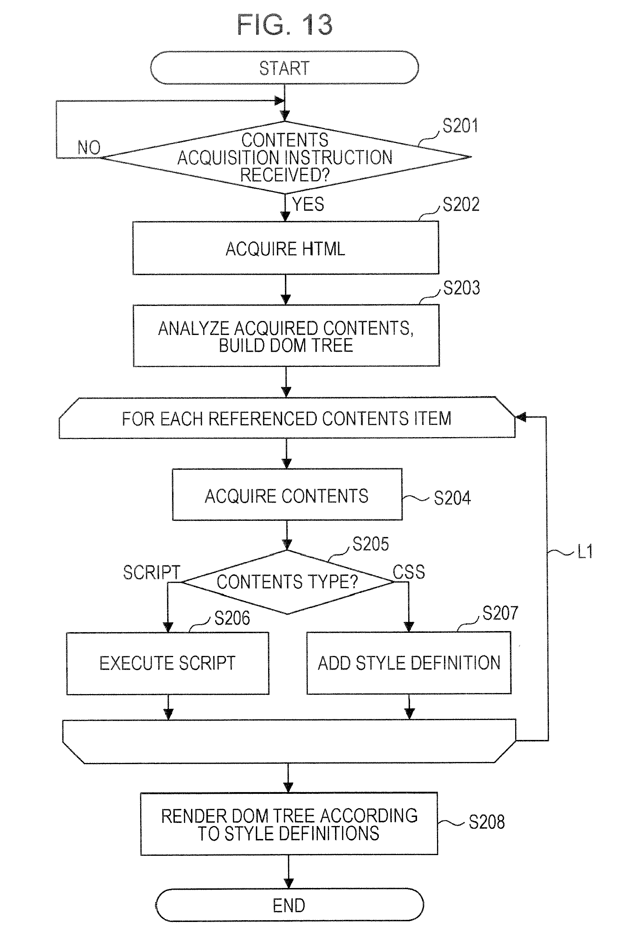

FIG. 13 is a flow chart for explaining an example of operating procedures for web contents rendering processing by a mobile terminal. FIG. 13 illustrates in detail processing executed by the mobile terminal 10 in relation to the processing in FIG. 6.

When a web contents acquisition instruction is inputted by a user on the mobile terminal 10 (S201: Yes), the contents acquiring unit 111 acquires the HTML file pertaining to the URL designated in the acquisition instruction (S202). The contents rendering unit 112 then analyzes (parses) the definition contents of the HTML file and builds a DOM tree (S203). The DOM tree is stored in the memory device 103.

Loop processing L1 is executed for each group of reference contents referenced by the HTML file. The contents rendering unit 112 acquires the reference contents in step S204 in the loop processing L1. The contents acquiring unit 111 splits the processing according to the type of acquired reference contents (S205). If the acquired reference contents is a script file, the contents rendering unit 112 executes the script defined in the script file (S206). Meanwhile, if the acquired reference contents is a CSS file, the contents rendering unit 112 adds the style definition included in the CSS file to the previously acquired style definition (S207).

When the loop processing L1 is finished, the contents rendering unit 112 renders the display elements that configure the DOM tree according to the style definition (S208). As a result, the image based on the web contents is displayed on the display device 106.

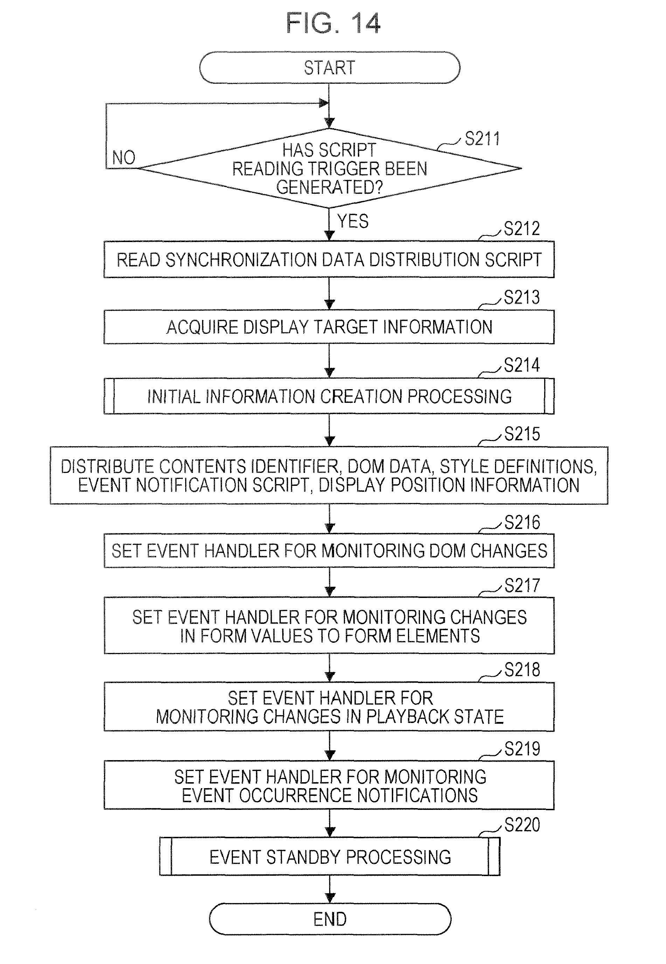

Next, processing executed by the mobile terminal 10 in relation to the processing in FIG. 7 will be explained in detail. FIG. 14 is a flow chart for explaining an example of operating procedures executed by the mobile terminal in response to the reading of the synchronized data distribution script.

When a trigger for reading the synchronized data distribution script has been generated (S211: Yes), the CPU 104 reads the synchronized data distribution script in the memory device 103 (S212). The synchronized data distribution script may be referenced, for example, from a HTML file of downloaded web contents. In this case, the acquisition of the synchronized data distribution script may be the trigger to read the script. The reference to the synchronized data distribution script in the HTML file may be previously embedded, or may be inserted by a proxy server when the HTML file is transmitted back from the contents server 30. Alternatively, the synchronized data distribution script may be registered in a bookmarklet in the mobile terminal 10. In this case, the selection of the bookmarklet by the user may act as the trigger for the reading of the synchronized data distribution script.

The data distributing unit 118 then acquires, from the display target information storage unit 131, display target information which includes the address information of the display terminals 20 and the display position information and the like (S213). The address information of the display terminals 20 may be stored, for example, in a computer not depicted in the drawings that is able to communicate with the mobile terminal 10 and the display terminals 20. For example, the display terminals 20 use a Global Positioning System (GPS) function and the like in response to an activation to acquire their own position information, and then transmit the position information and their own address information to the computer. The computer stores the received information. The data distributing unit 118 transmits, to the computer, an acquisition request for the pair of the position information and the address information stored in the computer. The position information of the mobile terminal 10 may be included in the acquisition request. The computer transmits, to the mobile terminal 10, the display target information pertaining to the display terminal 20 assumed to be closest to the mobile terminal 10 based on a comparison of the position information of the display terminals 20 and the position information of the mobile terminal 10.

The CPU 104 then executes initial information creation processing (S214). The initial information creation processing involves the creation of the DOM data m1, the style definition data c1, the event notification script sc1, and the contents identifier and the like.

The data distributing unit 118 then distributes the contents identifier, the DOM data m1, the style definition data c1, the event notification script sc1, and the display position information and the like to the display terminals 20 (S215). The display terminal 20 that is the distribution target can be specified based on the address information included in the display target information acquired in step S213. The display position information is also included in the display target information acquired in step S213.

The change monitoring unit 117 then sets an event handler for all of the DOMs that configure the DOM tree in order to monitor changes to the DOM tree (S216). For example, an event handler may be set for monitoring a mutation event, which conforms to a web standard, that occurs when a DOM is changed. For example, a "DOMSubtreeModified" which is one mutation event occurs when a DOM element is added or deleted. A "DOMAttrModified" event occurs when an attribute of a DOM element is changed. Details of the mutation events are described, for example, at "https://developer.mozilla.org/en-US/docs/Web/Guide/Events/Mutation_events". The DOM tree may be checked periodically and a change in the DOM tree may be detected due to the presence or absence of a difference.

The change monitoring unit 117 then sets an event handler for monitoring changes in form values with regard to form elements among the DOM elements (S217). The change monitoring unit 117 then sets an event handler for monitoring changes in a playback state of moving image contents with regard to video elements among the DOM elements (S218). A change in a playback includes a playback start, a temporary playback stop, a playback stop, or a seek manipulation and the like. A video element is an element related to a video tag added in HTML version 5. By using a video tag in HTML version 5, moving image contents can be played without installing a plug-in and the like.

The change monitoring unit 117 then sets an event handler for monitoring the reception of an event occurrence notification from the display terminals 20 (S219). The change monitoring unit 117 then executes event standby processing (S220). That is, the change monitoring unit 117 waits for the occurrence of an event relating to the event handlers set in steps S216 to S219.

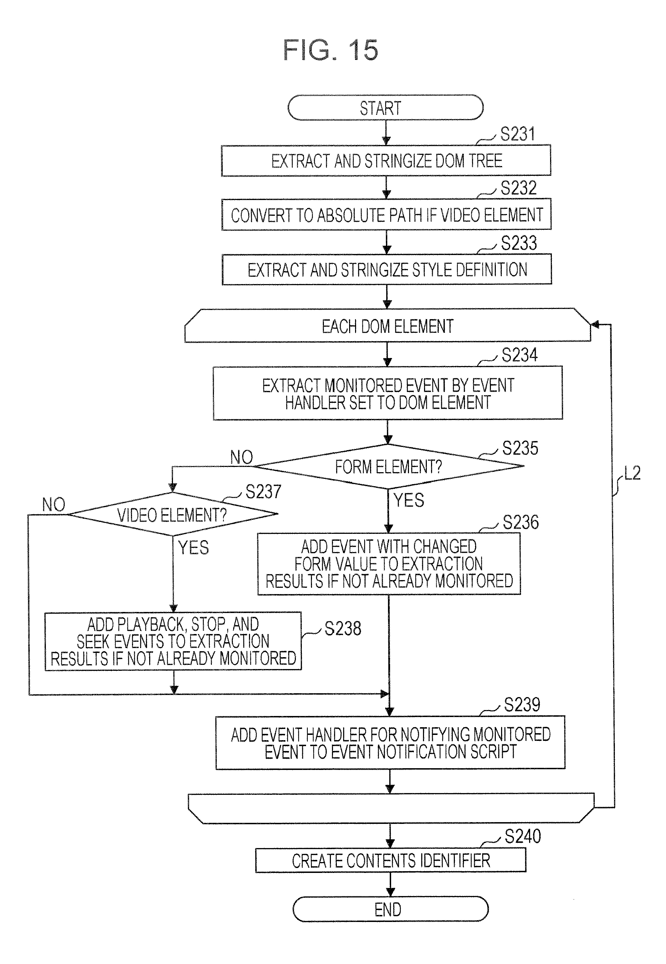

The following is a detailed description of the step S214. FIG. 15 is a flow chart for explaining an example of operating procedures for initial information creation processing.

The DOM extracting unit 115 in step S231 extracts the DOM tree from the contents display information through the contents rendering unit 112, and stringizes the DOM tree to create the DOM data m1. If a video element is present among the DOM elements that configure the DOM tree, The DOM extracting unit 115 then converts the path name pertaining to the video element to an absolute path name in the DOM data (S232). The path name pertaining to the video element is a path name set as a value of a "src" attribute of the video element or is a path name set as a value of the "src" attribute of a "source" tag within the video element. The path name is converted to an absolute path name in order to allow the display terminal 20 access to the moving image contents pertaining to the path name. That is, the moving image contents are downloaded by the display terminals 20.

The style extracting unit 116 then extracts the style definition from the contents display information through the contents rendering unit 112 and stringizes the style definition to create style definition data c1 (S233).

Loop processing L2 is executed next for each DOM element that configures the DOM tree. The DOM elements to be processed in the loop processing L2 are referred to as "target elements" hereinbelow.

The event handler extracting unit 113 in step S234 extracts the event monitored by the event handler set to the target element (S234). The event handler extracting unit 113 then splits the processing depending on whether the target element is a form element or not (S235). If the target element is a form element (S235: Yes), the routine moves to step S236. If the target element is not a form element (S235: No), the routine moves to step S237.

The event handler extracting unit 113 in step S236 adds the monitored event to the extraction results from step S234 if no event handler pertaining to the event monitored with regard to a change in a form value in the target element is set. The routine moves to step S239 after step S236 is executed.

The event handler extracting unit 113 then splits the processing depending on whether the target element is a video element or not in step S237. If the target element is a video element (S237: Yes), the routine moves to step S238. If the target element is not a video element (S237: No), the routine moves to step S239.

The event handler extracting unit 113 in step S238 adds the monitored event to the extraction results from step S234 if no event handler for monitoring the event (a playback start event, a playback stop event, a playback stop event, or a seek event) monitored with regard to a change in the playback state of a moving image in the target element is set. The routine moves to step S239 after step S238 is executed.

The script creating unit 114 in step S239 adds, to the event notification script sc1, the event handler for notifying the mobile terminal 10 about the monitored event included in the extraction results (S239).

A contents identifier is created after the loop processing L2 is competed (S240). The contents identifier may be created for example by using random numbers. Moreover, the contents identifier may be created by using the identification information (for example, address information) of each mobile terminal 10. If there is only one group of web contents that can be displayed in the mobile terminal 10, the identification information for each mobile terminal 10 may be used as-is for the contents identifier.

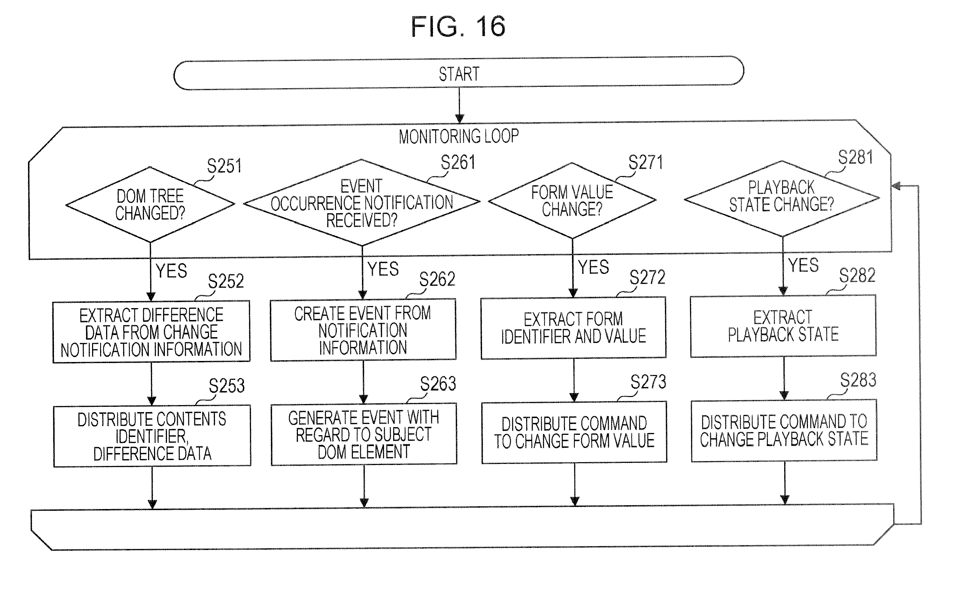

Details of the step S220 in FIG. 14 will be explained in detail hereinbelow. FIG. 16 is a flow chart for explaining an example of operating procedures for event standby processing.

When an event handler for monitoring a change in the DOM tree is invoked (S251: Yes), the change monitoring unit 117 extracts the difference data from the information (hereinbelow referred to as "change notification information") pertaining to the event detected by the event handler (S252). That is, the difference data is included in the "MutationEvent".

The data distributing unit 118 then distributes the contents identifier and the difference data to the display terminals 20 (S253).

If the event handler for monitoring the reception of the event occurrence notification from either of the display terminals 20 is invoked (S261: Yes), the change monitoring unit 117 creates an artificial event based on the information notified in the event occurrence notification (S262). Next, the created event is generated with regard to the DOM element that is the subject of the event indicated by the event occurrence notification (S263). As a result, the DOM tree is changed on the mobile terminal 10 side. The change of the DOM tree is detected in step S251. Therefore, step S252 and the subsequent steps are executed following step S262. That is, the change in the DOM tree detected in step S251 stems from a manipulation in the mobile terminal 10 or a manipulation in the display terminals 20.

When the event handler for monitoring a change in a form value in the form element is invoked (S271: Yes), the change monitoring unit 117 extracts, from the target element, an identifier of the form element (hereinbelow referred to as the "target element") in which the form value is changed and the form value after the change (S272). The identifier of the form element may be a value that indicates the order of the element in the form. Alternatively, a CSS selector or an xpath and the like may be used as the identifier. The data distributing unit 118 then distributes, to the display terminals 20, a command to change the form value (S273). The command includes the contents identifier and the identifier and the form value of the target element. As a result, the form value of the target element is changed in the display terminals 20.

If the event handler for monitoring a change in a playback state of a video element is invoked (S281: Yes), the change monitoring unit 117 extracts, from the target element, an identifier of the video element (hereinbelow referred to as the "target element") and information indicating the playback state of the moving image after the change (S282). The data distributing unit 118 then distributes a command to change the playback state of the moving image to the display terminals 20 (S283). The command includes the contents identifier and the identifier and the moving image playback state of the target element. As a result, the moving image playback state of the target element is changed in the display terminals 20.

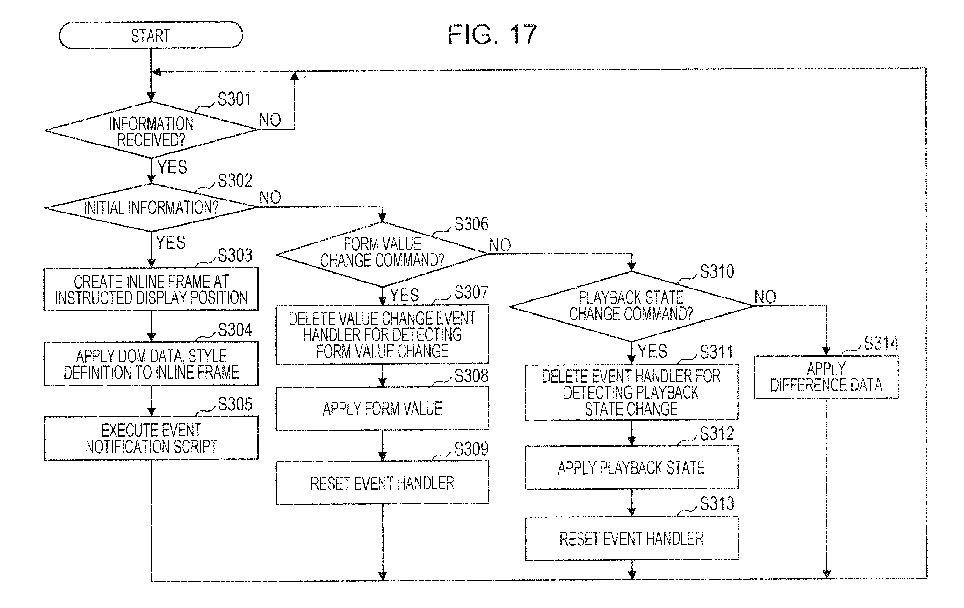

Processing executed by the display terminals 20 will be described next. FIG. 17 is a flow chart for explaining an example of operating procedures for executing the synchronized data distribution script in the display terminals. It is assumed in FIG. 17 that the reading of the synchronized data reception script has already been executed.

The data receiving unit 211 waits for the reception of information from the mobile terminal 10 (S301). When some type of information is received from the mobile terminal 10 (S301: Yes), the data receiving unit 211 determines whether the received information is initial information (S302). The initial information includes the contents identifier, the DOM data m1, the style definition data c1, the event notification script sc1, and the display position information and the like distributed from the mobile terminal 10 to the display terminals 20 in step S215 in FIG. 4.

If the initial information is received (S302: Yes), the display region creating unit 212 causes the contents rendering unit 215 to create an inline frame (iframe) of the size and at the position indicated in the display position information (S303). That is, an inline frame is used as an example of the aforementioned display region in the present embodiment instead of a window in a web browser. An inline frame is a frame used for displaying certain web contents inside other web contents. In order to display the image separately from what is outside of the inline frame, the image of the same display state is reproduced inside the inline frame based on the same DOM data and the same style definition data if the size of the inline frame is the same. Therefore, when implementing the integrated display D2 (FIG. 2) for example, there is an advantage that the images of the displays can be connected smoothly. Note that a web browser window may be created in place of the inline frame.

The display state applying unit 214 then applies the contents identifier, the DOM data m1, and the style definition c1 to the contents rendering unit 215 (inline frame) (S304). As a result, the image of the web contents is displayed inside the inline frame. The contents identifier is also associated with the inline frame. If a video element is included in the DOM tree reproduced based on the DOM data m1, the moving image contents are acquired and played based on the absolute path name pertaining to the video element.

The event handler setting unit 213 then executes the event notification script sc1 (S305). The event notification script sc1 functions as the event transmitting unit 216 in the display terminals 20.

Conversely, if the received information is not the initial information (S302: No), the data receiving unit 211 determines whether the received information is the form value change command (S306). The form value change command is transmitted in step S273 in FIG. 16.

If the received information is the form value change command (S306: Yes), the display state applying unit 214 deletes the setting of the event handler for monitoring changes in the form values for the form element (referred to as the "target element" hereinbelow) pertaining to the identifier included in the change command among the form elements displayed in the inline frame associated with the contents identifier included in the change command (S307). The display state applying unit 214 then applies the form value included in the change command to the target element (S308). The point of step S307 is to avoid the creation of an event notification loop in which the mobile terminal 10 is notified about the change of the form value due to the execution of step S308 and the change of the form value is notified once again by the mobile terminal 10.

The display state applying unit 214 then resets the event handler in which the setting was deleted in step S307 to the target element (S309).

If the received information is a playback state change command for moving image contents (S310: Yes), the display state applying unit 214 deletes the setting of the event handler for monitoring changes in the playback state of the moving image contents for the video element (referred to as the "target element" hereinbelow) related to the identifier included in the change command among the video elements displayed in the inline frame associated with the contents identifier included in the change command (S311). The point of step S311 is the same as that of step S307. The display state applying unit 214 then applies the playback state of the moving image contents included in the change command to the target element (S312).

The display state applying unit 214 then resets the event handler in which the setting was deleted in step S311 to the target element (S313).

If the received information is difference data (S310: No), the display state applying unit 214 applies the difference data to the inline frame related to the difference data and to the contents identifier (S314). As a result, the display state of the image inside the inline frame is synchronized with the display state of the mobile terminal 10.

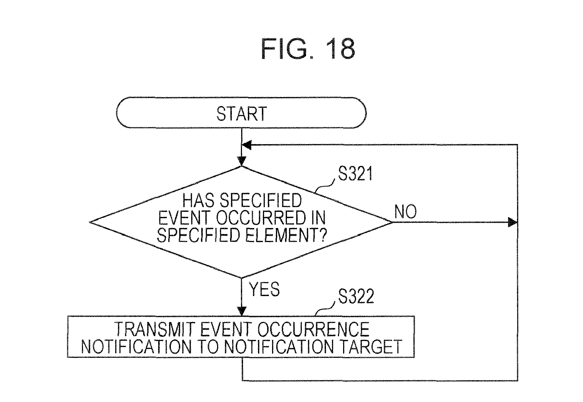

FIG. 18 is a flow chart for explaining an example of operating procedures for executing the event notification script in the display terminals.

The event transmitting unit 216 waits for the occurrence of an event (S321). When any of the event handlers included in the event notification script are invoked (S321: Yes), the event transmitting unit 216 transmits an event occurrence notification to the mobile terminal 10 set as the notification target in accordance with the definition of the event handler (S322). The event occurrence notification includes information indicating the DOM element that is the target of the event and information indicating the type of event.

While an example of direct communication between the mobile terminal 10 and the display terminals 20 has been described in the present embodiment, the communication between the mobile terminal 10 and the display terminals 20 may be relayed through a signaling server, a session traversal of UDP through NATs (STUN) server, or a traversal using relay NAT (TURN) server and the like.

Moreover, the present embodiment describes an example in which an event handler is extracted by the event handler extracting unit 113 and the event notification script sc1 is created based on the extracted event handler. However, this processing may be omitted. For example, the display terminals 20 may monitor all of the events pertaining to all of the DOM elements and may notify the mobile terminal 10 about all of the occurrences of events. However in this case, the amount of communication may increase due to the mobile terminal 10 being notified about all of the events. In other words, an increase in the communication amount can be suppressed by limiting the amount of notifications of events transmitted from the display terminals 20 to the mobile terminal 10 to only relevant notifications.

While the present embodiment describes an example of the script creating unit 114 in the mobile terminal 10 creating the event notification script sc1, the creation of this script may be performed by the display terminals 20. In this case, the mobile terminal 10 may distribute the information relevant to the creation of the event notification script sc1 to the display terminals 20. The extraction results extracted by the event handler extracting unit 113 may be used as such information.

While an example of the display state of the web contents being synchronized between the mobile terminal and the display terminals 20 is described for the sake of convenience in the present embodiment, the devices in which the web contents are synchronized may be the same type of device. For example, the mobile terminal 10 may be used in place of the display terminal 20. Further, a personal computer (PC) may be used in place of the mobile terminal 10.

The terminal positioned as the mobile terminal 10 may not have the display device 106. That is, the terminal may not be a terminal used by a user to view web contents. In this case, the display state may be synchronized among a plurality of display terminals 20.

As described above, the first embodiment allows for the ability to synchronize display states of the same web contents between a plurality of terminals even when any one of the terminals is subjected to a manipulation.

The processing executed by the mobile terminal 10 or by the display terminals 20 is implemented with scripts such as the synchronized data distribution script, the synchronized data reception script, or the event notification script. Therefore, the terminals are able to implement the present embodiment if the terminals have the functions of a typical web browser.

According to the present embodiment, structure data such as the DOM data and the style definitions is distributed without performing data distribution through streaming such as in a remote desktop technique such as virtual network computing (VNC). Therefore, an increase in loads on data processing or network communication can be suppressed. Moreover, there is lower likelihood that problems may occur such as display collapse due to differences in resolution.

Moreover, the desire for developing separate web contents for the mobile terminal 10 and for the display terminals 20 is reduced since the event handlers for the display terminals 20 are created automatically based on one group of web contents.

The following is an explanation of a second embodiment. Features of the second embodiment that differ from the first embodiment will be described. Thus, features that are not mentioned in particular are the same as those described in the first embodiment.

An example in which problems due to a same-creator policy or a referrer restriction provided from the point of view of security can be avoided is described in the second embodiment.

A same-creator policy is a rule that prohibits access from a script with regard to a style definition read from a CSS file downloaded from an origin that is different from that of the HTML file. The origin is the portion of the URL except for the path name. That is, the origin is specified by the scheme, the host name, and the port number. In the case of the URL "http://www.webpage.com:8888/style.css" for example, "http" represents the scheme, "www.webpage.com" represents the host name, and "8888" represents the port name. Therefore, the origin is "http://www.webpage.com:8888".

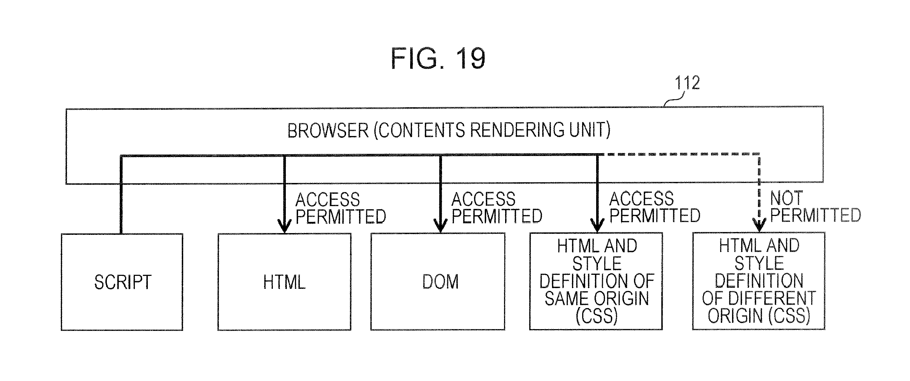

FIG. 19 is a view for explaining a same-creator policy. As illustrated in FIG. 19, access to the HTML, the DOM and the style definition using a script is conducted through the contents rendering unit 112 which is a web browser. The browser allows access to the HTML and the DOM in response to an access request from a script. Conversely in regard to the style definition, the browser allows access using the script only to the style definition read from a CSS file having the same origin as that of the HTML file that is the reference source. In other words, the browser prohibits access using the script to a style definition read from a CSS file having an origin different from that of the HTML file that is the reference source. Specifically, the browser returns a blank value from the script if there is a request for the acquisition of a style definition related to a CSS file different from the HTML file.

While the extraction of the style definition is executed by the style extracting unit 116 in the according to the present embodiment, the extraction of the style definition may be realized by the style extracting unit 116 causing the CPU 104 to execute the synchronized data distribution script. That is, the style definition is extracted due to the script in the present embodiment. Therefore, the style extracting unit 116 is not able to extract the style definition if the origins of the HTML file and the CSS file are different. Accordingly, the mobile terminal 10 is not able to distribute the style definition to the display terminals 20.

However, as opposed to the DOM tree, the style definition is static. That is, the style definition is not changed even if the display state of the image displayed based on the web contents is changed. Accordingly, it is possible to cause the display terminals 20 to download the CSS file and acquire the style definition from the CSS file.

However, if a referrer restriction is applied, the aforementioned method may be invalidated. A referrer restriction is a rule for prohibiting references to a CSS file, a script file, or an image file from a HTML file assigned to a specific URL. For example, when a referrer restriction is provided on the contents server 30 side, the display terminal 20 may not be able to acquire a CSS file referenced by the DOM data m1 distributed to the display terminal 20.

Accordingly, when the origins of the HTML file and the CSS file are different in the first embodiment, there is a possibility that the style definition related to the CSS file may not be applied on the display terminal 20 side. This is the problem caused by the same creator policy or the referrer restriction.

The following two methods may be considered as methods for avoiding the above problem.

One method involves the style extracting unit 116 accessing the DOM tree in which the style definition is applied and extracting the style definition from the DOM tree. While the style definition of the initial state is not extracted from the DOM tree, the style definition after the sizes and display positions of the display elements have been calculated along with the display sizes of the web contents, may be extracted. Whereas the sizes and positions of the elements in the initial state style definition are defined by percentages (%), the sizes and positions of the elements in the style definition extracted from the DOM tree are represented as pixel units. That is, while the former represents a relative value, the latter represents an absolute value.

Therefore, while an image of the same size as the image in the mobile terminal 10 can be displayed by the display terminals 20 according to the first method, it is difficult to adjust the size of the image displayed in the display terminals 20 to the inline frame created in the display terminals 20.

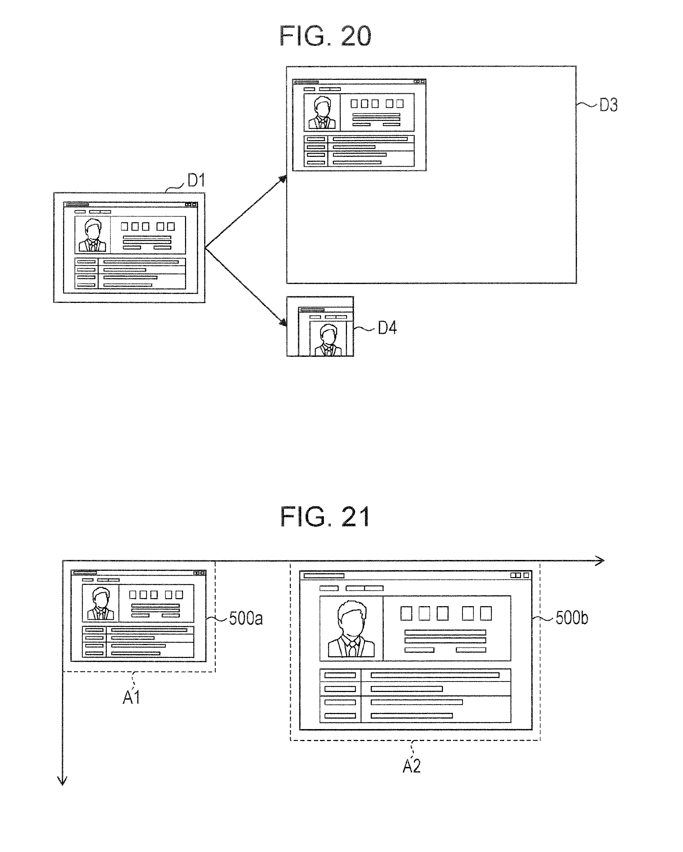

FIG. 20 illustrates examples of display images of images in the terminals according to the first method of the second embodiment. The display D1 in FIG. 20 is the display of the mobile terminal 10. A display D3 is the display of a large display terminal 20. A display D4 is the display of a small display terminal 20. As can be seen in FIG. 20, images of the same size as the mobile terminal 10 are displayed in the display terminals 20 due to the style definitions distributed to the display terminals 20 being based on absolute values in the first method.

A second method will be described that is able to resolve the problem of the first method. The contents rendering unit 112 in the second method renders the image as illustrated in FIG. 21.

FIG. 21 illustrates an example of image rendering according to a second method of the second embodiment. As illustrated in FIG. 21, two images represented by an image 500a and an image 500b are rendered based on one group of web contents in the mobile terminal 10 according to the second method. The image 500a is created inside a window (referred to hereinbelow as the "browser region") of the web browser in the mobile terminal 10, that is, inside an area A1 to be displayed in the display D1 of the mobile terminal 10.

The image 500b is rendered inside an inline frame A2 created outside of the area A1 (referred to hereinbelow as the "non-display region") to be displayed in the display D1. The inline frame A2 has the size (height and width) of the inline frame created in the display terminals 20. The style extracting unit 116 extracts the style definition from the DOM tree created for the inline frame A2. The data distributing unit 118 distributes the style definition to the display terminals 20. The coordinate values of the display elements are absolute values in the style definition. The coordinate values are calculated based on the same size as the inline frame created in the display terminals 20. Therefore, the size of the image 500 rendered in the display terminals 20 based on the style definition correspond to the size of the displays of the display terminals 20. The image 500b does not affect the display state of the image in the mobile terminal 10 because the image 500b is rendered in the non-display region.

If the sizes of the inline frames in the display terminals 20 are different, a plurality of inline frames of different sizes may be created in the non-display region.

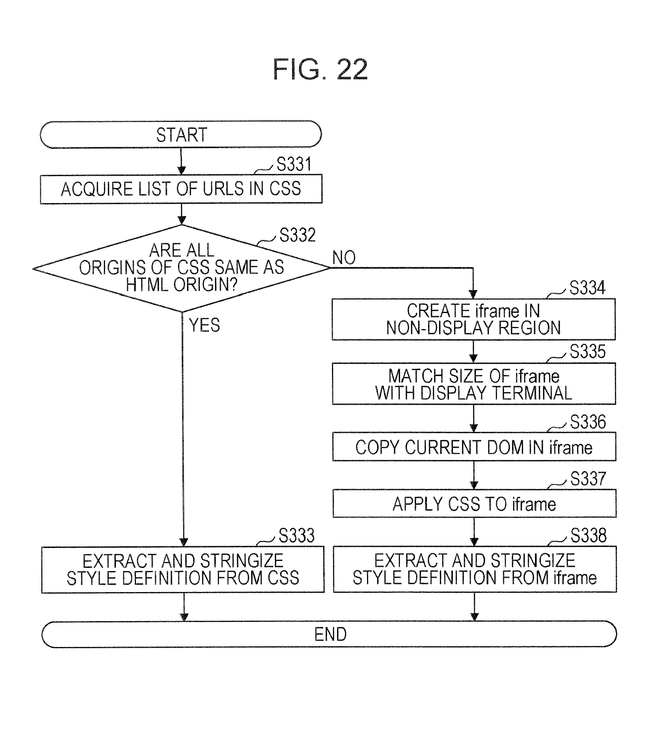

When using the second method, the step S233 in FIG. 15 is changed as illustrated in FIG. 22.

FIG. 22 is a flowchart for explaining an example of operating procedures for style definition extraction processing according to the second method in the second embodiment.

The style extracting unit 116 in step S331 acquires a list of the URLs of the CSS files of the web contents to be displayed. The style extracting unit 116 then determines whether all of the origins of the URLs included in the list are the same as the origins of the HTML files in the web contents (S332). If all of the origins of the URLs are the same as the origins of the HTML files (S332: Yes), the style extracting unit 116 extracts the style definition from the contents display information through the contents rendering unit 112, and stringizes the style definition to create the style definition data c1 (S333).

If at least a portion of the origins of the URLs in the CSS files is different from the origins of the HTML files (S332: No), the style extracting unit 116 causes the contents rendering unit 112 to create the inline frame in the non-display region (S334). The style extracting unit 116 then adjusts the size of the inline frame to match the size of the inline frame created in the display terminal 20 (S335). The information indicating the size of the inline frame created in the display terminal 20 may be stored, for example, for each display terminal 20 in the display target information storage unit 131.

The style extracting unit 116 then acquires the DOM tree created for the browser region and applies to DOM tree to the inline frame (S336). The style extracting unit 116 then causes the contents rendering unit 112 to apply the CSS files to the inline frame (S337). The contents rendering unit 112 is able to access the CSS files assigned to an origin different from that of the HTML file because the contents rendering unit 112 is implemented by a web browser.

The style extracting unit 116 then extracts the style definition from the inline frame through the contents rendering unit 112, and stringizes the style definition to create the style definition data c1 (S338). That is, the style definition data c1 including the coordinate values of the absolute value calculated to match the size of the inline frame is created.

As described above, even if a CSS file is assigned to an origin different from that of the HTML file, the same effects as the first embodiment can be achieved by the second embodiment.

The following is an explanation of a third embodiment. Features of the third embodiment that differ from the first embodiment will be described. Thus, features that are not mentioned in particular are the same as those described in the first embodiment.

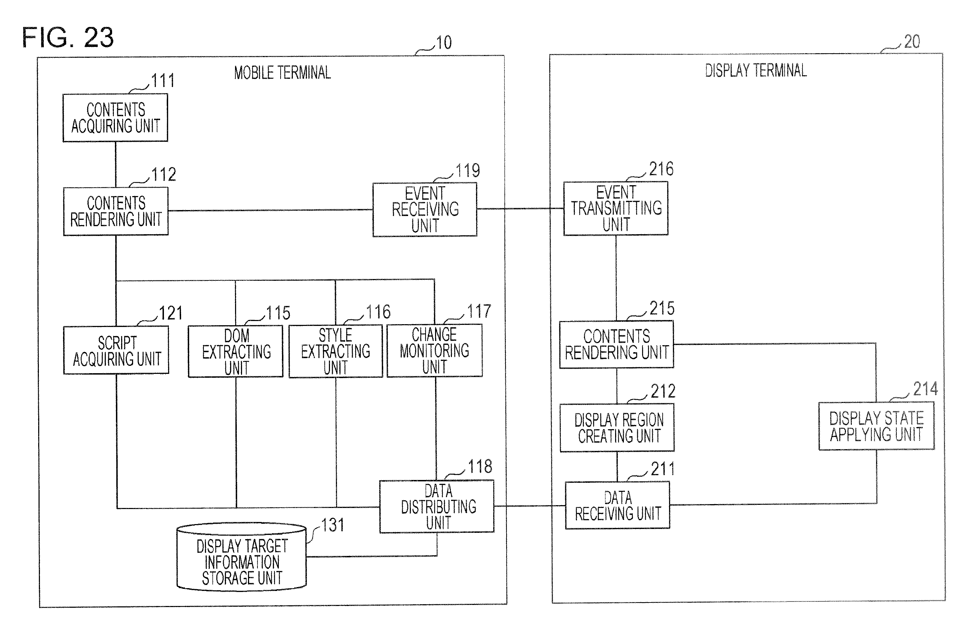

FIG. 23 illustrates a functional configuration example of a mobile terminal and a display terminal according to the third embodiment. The same reference numerals used in FIG. 23 are used for the same components in FIG. 4 and explanations thereof will be omitted.

The mobile terminal 10 in FIG. 23 has a script acquiring unit 121 in place of the event handler extracting unit 113 and the script creating unit 114. The display terminal 20 does not include the event handler setting unit 213.

The script acquiring unit 121 acquires a definition (referred to hereinbelow as "script definition") from a script that configures the web contents, from the contents rendering unit 112. Therefore, the script definition acquired by the script acquiring unit 121 is included in the initial information distributed to the display terminals 20 by the data distributing unit 118 in place of the event notification script sc1 in the third embodiment. Consequently, the display terminals 20 may not have the event handler setting unit 213 that executes processing related to the event notification script sc1.

That is, the definition contents of the event handlers related to the same web contents are the same in the mobile terminal 10 and in the display terminals 20 in the third embodiment. In order to enable the processing as described in FIG. 11 in the first embodiment under the above state, libraries that are mounted portions pertaining to a function invoked in a script are different in the mobile terminal 10 and the display terminals 20 in the third embodiment.

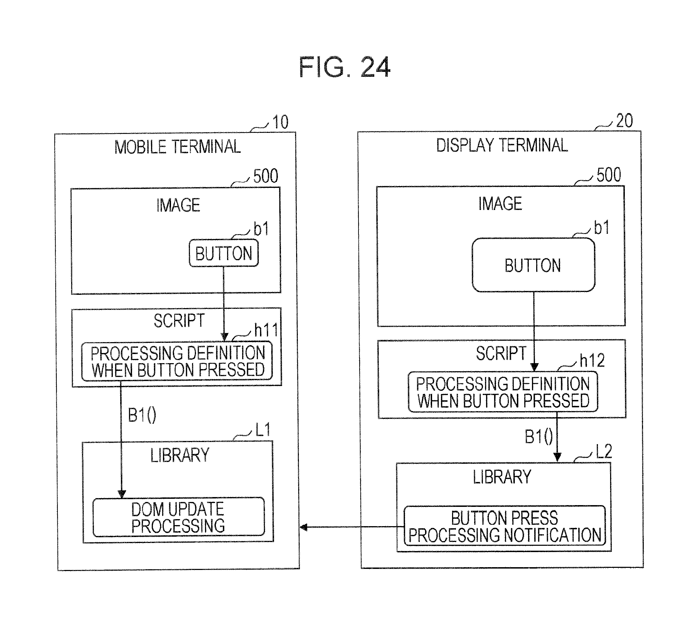

FIG. 24 is a view for explaining a mechanism of the third embodiment. The mobile terminal 10 in FIG. 24 has a library L1 and the display terminal 20 has a library L2. The libraries L1 and L2 are collections of the same functions but have different mounted contents for each function. For example, it is assumed here that images 500 related to the same web contents are displayed in the mobile terminal 10 and in the display terminal 20. When a button b1 inside the image 500 displayed in the mobile terminal 10 is pressed under this state, the contents rendering unit 112 executes processing based on an event handler h11 that includes a processing definition when the button is pressed. When a function called "B1()" included in the library L1 is invoked in the event handler h11, updating of the DOM tree is executed based on the mounting of "B1()" in the library L1.

Conversely, when the button b1 inside the image 500 displayed in the display terminal 20 is pressed, the contents rendering unit 215 executes processing based on the event handler h11 that includes the processing definition when the button is pressed. When the function called "B1()" included in the library L1 is invoked in the event handler h11, processing to notify that the button is pressed is executed based on the mounting of "B1()" in the library L1. As a result, the mobile terminal 10 is notified that the button b1 has been pressed.

When explained in more detail using FIG. 9, if the definition contents of the event handlers in the mobile terminal 10 are represented by event handlers eh111 and eh112, the definition contents of the event handlers in the display terminal 20 are represented by the event handlers eh111 and eh112. That is, the definition contents of the event handlers in both terminals are the same. The implementation of the functions invoked by each of the event handlers is different in the terminals in the third embodiment. For example, the implementation pertaining to "$('#to').append" is different in the libraries L1 and L2 when using the event handler eh111.

The library L2 may be installed beforehand in the display terminal 20 or may be transmitted from the mobile terminal 10 to the display terminal 20.

According to the third embodiment as described above, the same effects as the first embodiment can be achieved by differentiating the implementation of the functions invoked by the script in the terminals in place of creating the event notification script sc1. The third embodiment may be combined with the second embodiment.

The following is an explanation of a fourth embodiment. Features of the fourth embodiment that differ from the first embodiment will be described. Thus, features that are not mentioned in particular are the same as those described in the first embodiment.

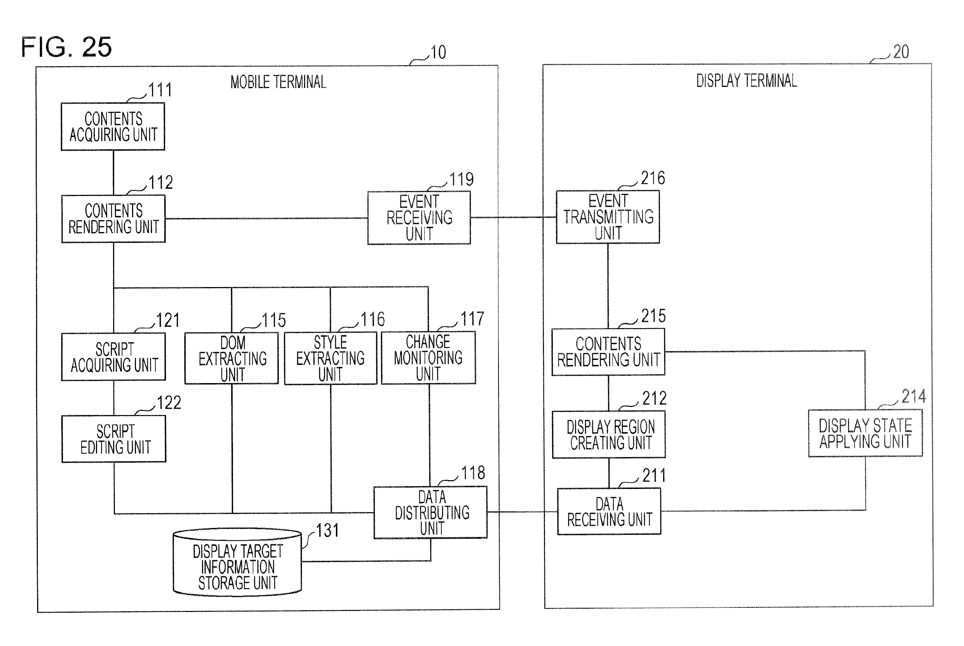

FIG. 25 illustrates a functional configuration example of a mobile terminal and a display terminal according to the fourth embodiment. The same reference numerals used in FIG. 25 are used for the same components in FIG. 4 and explanations thereof will be omitted.

The mobile terminal 10 in FIG. 25 has the script acquiring unit 121 and a script editing unit 122 in place of the event handler extracting unit 113 and the script creating unit 114. The display terminal 20 does not include the event handler setting unit 213.

The script acquiring unit 121 is the same as that described in FIG. 23. The script editing unit 122 edits a script definition acquired by the script acquiring unit 121. The script definition edited by the script editing unit 122 is included in the initial information distributed to the display terminals 20 by the data distributing unit 118 in place of the event notification script sc1 in the third embodiment. Consequently, the display terminals 20 may not have the event handler setting unit 213 that executes processing pertaining to the event notification script sc1.

Processing to be executed by the mobile terminal 10 and processing to be executed by the display terminal 20 are defined in the event handler of the script definition that configures the web contents in the fourth embodiment. However, the processing to be executed by the display terminal 20 is invalidated ("commented-out") in the script definition of the initial state.

The script editing unit 122 performs editing of the script definition acquired by the script acquiring unit 121 so that processing to be executed by the display terminal 20 is invalidated and processing to be executed by the mobile terminal 10 is invalidated. As a result, the script definition which invalidates the processing for notifying the mobile terminal 10 in the event handlers is distributed to the display terminal 20. The invalidation of the processing to be executed by the mobile terminal 10 may be performed by "commenting out" the definition pertaining to the processing or by deleting the definition pertaining to the processing.

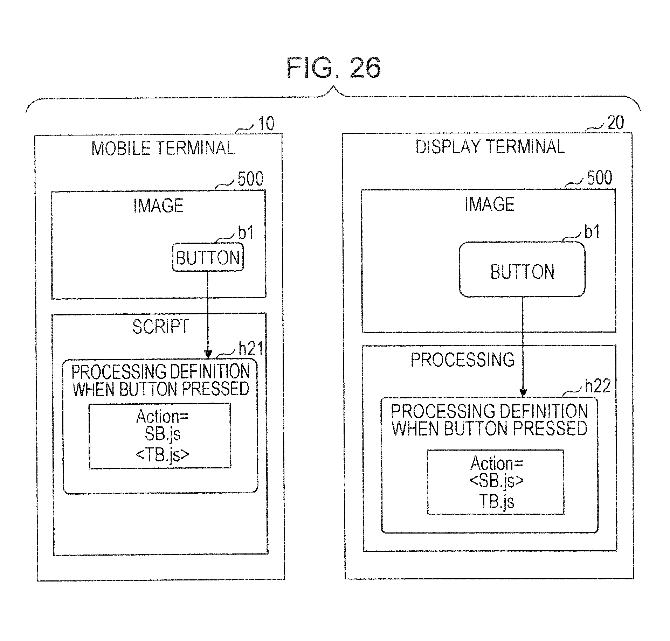

FIG. 26 is a view for explaining a mechanism of the fourth embodiment. The same reference numerals used in FIG. 26 are used for the same components in FIG. 24 and explanations thereof will be omitted.

When the button b1 inside the image 500 displayed in the mobile terminal 10 is pressed in FIG. 26, the contents rendering unit 112 executes processing based on an event handler h21 that includes a processing definition when the button is pressed. "SB.js" is activated and "TB.js" is invalidated by the event handler h21. "SB.js" represents processing to be executed by the mobile terminal 10, for example, processing to change the DOM tree.

Conversely, when the button b1 inside the image 500 displayed in the display terminal 20 is pressed, the contents rendering unit 215 executes processing based on the event handler h22 that includes the processing definition when the button is pressed. "TB.js" is activated and "SB.js" is invalidated by the event handler h22. "TB.js" represents processing to be executed by the display terminal 20, for example, notification processing with regard to the pressing of the button b1.

When described in more detail with reference to FIG. 9, "sender.sendMessage('#target', event);" which is the definition contents of the event handler eh21 is commented out in addition to "$('#to').append('<span>' + event.pageX +'</span>');" in the event handler eh11 in the fourth embodiment.

The script editing unit 122 invalidates "$('#to').append('<span>' + event.pageX +'</span>');" and "sender.sendMessage('#target', event);" is activated. The data distributing unit 118 distributes the script definition edited in this way to the display terminals 20. As a result, the mobile terminal 10 is notified about a manipulation of the display terminal 20.

The processing executed by the script editing unit 122 may not be performed in the display terminals 20. However, if there are a plurality of display terminals 20, the same editing processing is executed in the plurality of display terminals 20. Therefore in this case, the execution of the editing processing in an integrated manner in the mobile terminal 10 is effective.

As described above according to the fourth embodiment, a processing definition for the display terminal 20 is invalidated in addition to the processing definition for the mobile terminal 10 in the script definition. By applying, to the display terminal 20, the script definition in which the processing definition for the mobile terminal 10 is invalidated and the processing definition for the display terminal 20, the same effects as the first embodiment can be achieved. The fourth embodiment may be combined with the second embodiment.

The following is an explanation of a fifth embodiment. The fifth embodiment describes an example of the application to a specific scenario that uses the techniques described in the first to fourth embodiments. A smart table 20a represents an example of the display terminal 20 in the fifth embodiment. It is assumed that one smart table 20a is disposed in a certain meeting room. The smart table 20a has the same functional configurations as the display terminal 20 in any embodiment among the first to fourth embodiments.

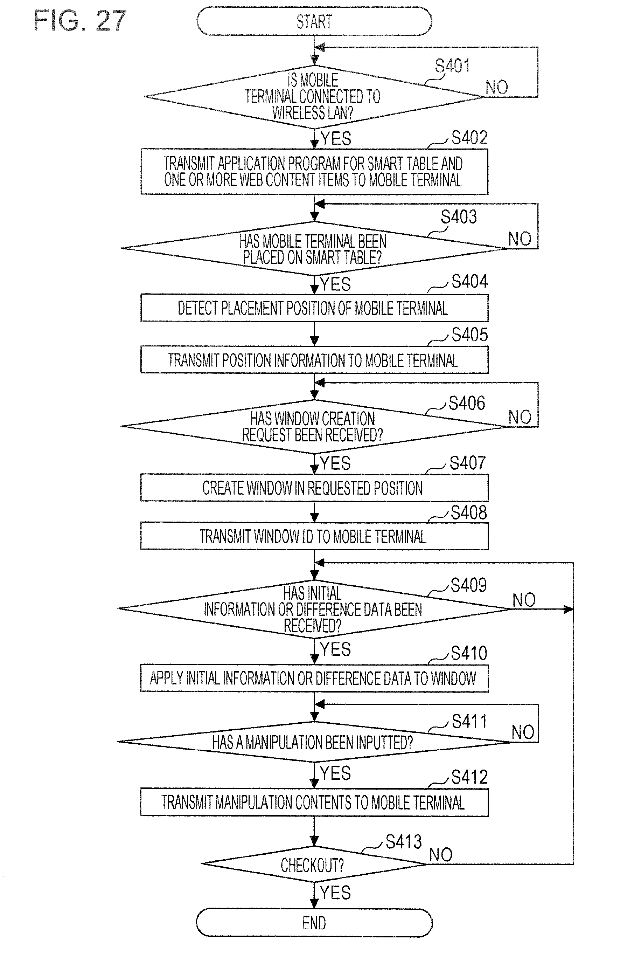

FIG. 27 is a flow chart for explaining an example of operating procedures executed by a smart table according to the fifth embodiment.

The smart table 20a, for example, waits for a mobile terminal 10 connection through an access point of a wireless LAN installed inside the meeting room (S401). The user of the mobile terminal 10 enters the meeting room and the mobile terminal 10 is connected to the wireless LAN. The communication between the smart table 20a and the mobile terminal 10 is subsequently carried out through the wireless LAN. The smart table 20a detects the connection to the wireless LAN due to the mobile terminal 10 and transmits an app for correspondence with the smart table 20a and at least one group of web contents to the mobile terminal 10 (S402). The app for correspondence with the smart table 20a is an application program for causing the mobile terminal 10 to execute processing to establish a link with the smart table 20a. The one or more group of web contents represents, for example, web contents applicable to the location which is the meeting room. However, the web contents may be downloaded from the contents server 30. In this case, the smart table 20a may transmit identification information pertaining to the smart table 20a or to the meeting room to the mobile terminal 10 in place of the web contents. The app for correspondence with the smart table may cause the mobile terminal 10 to download the web contents corresponding to the identification information.

The smart table 20a then waits until the mobile terminal 10 is placed on the smart table 20a (S403). The smart table 20a may cause the display device (touch panel) of the mobile terminal 10 to display a message encouraging the placement of the mobile terminal 10.

Upon detecting that the mobile terminal 10 has been placed, (S403: Yes), the smart table 20a detects the position where the mobile terminal 10 has been placed (S404). The placement of the mobile terminal 10 is detected, for example, based on a notification from the mobile terminal 10. Additionally, the placement of the mobile terminal 10 may be detected by a sensor provided in the smart table 20a.

The position of the mobile terminal 10 may be detected, for example, by a certain pattern (referred to hereinbelow as a "position recognition pattern"), which is displayed in the mobile terminal 10 due to the app for correspondence with the smart table, being recognized by a camera installed in the meeting room and connected to the smart table 20a.

Alternatively, the position where the mobile terminal 10 is placed may be detected by a sensor provided in the mobile terminal 10. For example, near field communication (NFC) tags may be attached in a plurality of locations on the smart table 20a. IDs of the NFC tags may be read by a NFC reader provided in the mobile terminal 10 when placed on the smart table 20a. The mobile terminal 10 notifies the smart table 20a about the IDs whereby the position of the mobile terminal 10 is detected. In order to allow for the mobile terminal 10 to be placed on an NFC tag, the smart table 20a may detect a nearby user with a motion detector and may display a message encouraging the placement of the mobile terminal 10 at a position where an NFC tag is attached.

The smart table 20a then transmits the position information of the mobile terminal 10 to the mobile terminal 10 (S405). The position information may be information which enables the smart table 20a to recognize the position on the smart table 20a. For example, the position information may include IDs or coordinate values indicating a position. The smart table 20a then waits for a request to create a window from the mobile terminal 10 (S406). The window is a window for displaying an image based on the web contents and is displayed, for example, by a web browser provided in the smart table 20a.

If a window creation request has been received from the mobile terminal 10 (S406: Yes), the display region creating unit 212 in the smart table 20a causes the contents rendering unit 215 to create the number of windows designated in the creation request in positions designated in the creation request (S407). If a plurality of windows are created, the windows may be disposed partially or completely overlapping each other, or may be aligned so as not to overlap each other.

The smart table 20a then transmits the IDs (referred to hereinbelow as "window IDs") of the created windows to the mobile terminal 10 (S408).

The data receiving unit 211 in the smart table 20a then waits for the reception of the initial information or the difference data (S409). The initial information is the initial information as described in the first, third and fourth embodiments. The difference data is the difference data as described in the first embodiment.

If the initial information or the difference data has been received by the data receiving unit 211 (S409: Yes), the display state applying unit 214 in the smart table 20a applies the initial information or the difference data to the window related to the window ID received along with the initial information or the difference data (S410). As a result, the display state of the image in the window is synchronized with the display state in the mobile terminal 10.

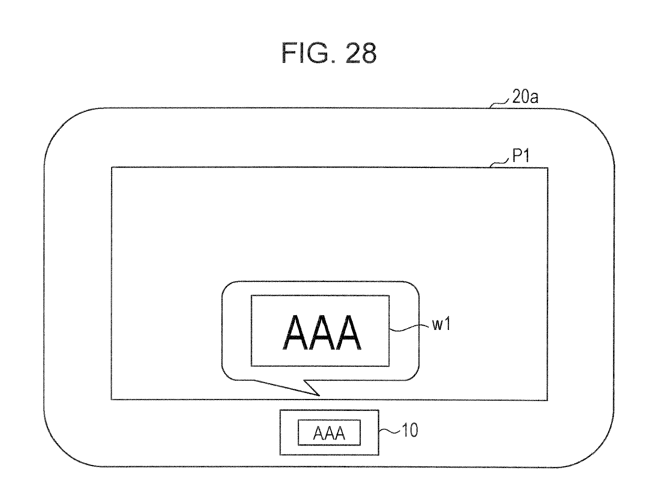

FIG. 28 illustrates an example of synchronization between a display state of the mobile terminal and a display state of the smart table. FIG. 28 depicts a view as seen from above the smart table 20a. The mobile terminal 10 is placed on a portion of the frame of a touch panel P1 of the smart table 20a. A window W1 is displayed while being associated with the position where the mobile terminal 10 is placed. The display state of the image displayed in the window W1 is the same as the display state of the image in the mobile terminal 10. FIG. 28 depicts an example in which only one window is created for the sake of convenience. FIG. 28 depicts the window W1 in a portion of the touch panel P1 so that images from a plurality of mobile terminals 10 can be displayed at the same time at the positions where each of the mobile terminals 10 are placed. However, the window W1 may be displayed by being enlarged to cover the entire screen of the touch panel P1.

The contents rendering unit 215 of the smart table 20a then waits until a manipulation by the user is inputted (S411). When a manipulation by the user is inputted, the smart table 20a transmits the information indicated in the contents of the manipulation to the mobile terminal 10 (S412). The manipulation on the image is transmitted to the mobile terminal 10 according to the mechanisms described in the first to fourth embodiments.

The smart table 20a then determines whether the manipulation is a checkout instruction (S413). The checkout instruction is an instruction that indicates that the use of the smart table 20a is finished and is inputted according to a certain manipulation on the smart table 20a. If the checkout instruction is inputted (S413: Yes), the processing in FIG. 27 is finished.

Conversely, if the inputted manipulation is not a checkout instruction but is an instruction pertaining to the image displayed in the window (S413: No), the smart table 20a subsequently continues the steps from step S409.

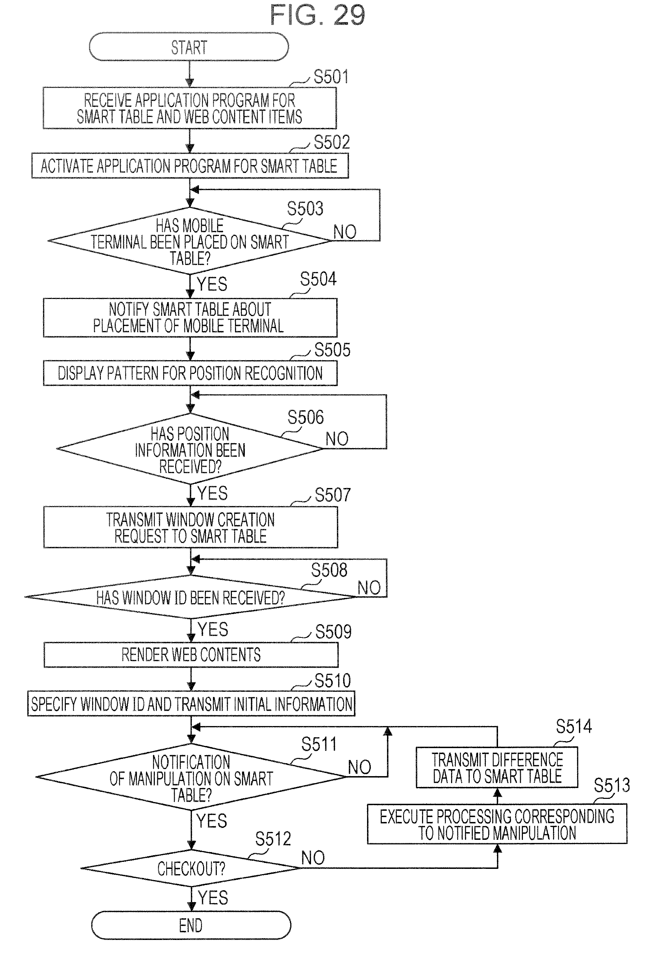

Processing executed by the mobile terminal 10 will be described next. FIG. 29 is a flow chart for explaining an example of operating procedures executed by a mobile terminal according to the fifth embodiment.

In step S501, the contents acquiring unit 111 of the mobile terminal 10 receives the application program for correspondence with the smart table and at least one group of web contents transmitted from the smart table 20a in step S402.

The mobile terminal 10 then activates the application program for correspondence with the smart table (S502). The application program for correspondence with the smart table causes the CPU 104 to execute the following steps S503 to S508.

The mobile terminal 10 in step S503 waits for the placement on the smart table 20a (S503). If the placement on the smart table 20a is detected (S503: Yes), the mobile terminal 10 transmits a notification indicating the placement to the smart table 20a (S504). The mobile terminal 10 then displays the position recognition pattern in the display device 106 (S505). If the position of the mobile terminal 10 is detected by using NFC tags, the display of the position recognition pattern may be omitted.

The mobile terminal 10 then waits for the reception of the position information from the smart table 20a while displaying the position recognition pattern (S506). When the position information is received (S506: Yes), the mobile terminal 10 designates the position information and transmits a window creation request to the smart table 20a (S507). A value indicating the number of groups of web contents received in step S506 is also included in the creation request. The mobile terminal 10 then waits for the reception of the window IDs of the windows created by the smart table 20a (S508).

When the window IDs are received, the contents rendering unit 112 executes rendering processing on the groups of web contents received in step S501 (S509). As a result, the image based on the web contents is displayed on the mobile terminal 10. The groups of web contents may be rendered in different tab windows. The window IDs received from the smart table 20a are associated with the tab windows.

The data distributing unit 118 then transmits, to the smart table 20a, the initial information of the web contents corresponding to the window IDs for each window ID (S510). The event receiving unit 119 of the mobile terminal 10 then waits for the reception of information indicating the contents of a manipulation on the smart table 20a (S511). Upon receiving the information (S511), the event receiving unit 119 determines whether the manipulation indicated by the information is a checkout instruction (S512). If the manipulation is a checkout instruction (S512: Yes), the processing in FIG. 29 is finished.

If the manipulation is not a checkout instruction and is a manipulation on the image (S512: No), the change monitoring unit 117 artificially creates an event corresponding to the manipulation in the DOM tree corresponding to the window ID included in the information. As a result, the processing corresponding to the event, that is, the processing defined in the event handler corresponding to the event, is executed by the contents rendering unit 112 (S513). As a result of the processing being executed, the configuration of the DOM tree is changed. That is, the display state of the image related to the DOM tree is changed. The data distributing unit 118 then transmits the difference data of the DOM tree before and after the change to the smart table 20a (S514).

According to the fifth embodiment as described above, the display states of the mobile terminal 10 and the smart table 20a can be synchronized for the web contents applicable to the meeting room. The fifth embodiment may be applied to a display terminal 20 other than the smart table 20a. For example, the fifth embodiment may be applied to digital signage apparatus out of doors.

The mobile terminal 10 in the above embodiments is an example of an information processing terminal. The web contents represent an example of display data. The contents rendering unit 112 is an example of a display control unit, a process executing unit, a changing unit, and a second creating unit. The script creating unit 114 is an example of a first creating unit. The DOM tree is an example of data for indicating a display state. The data distributing unit 118 is an example of a transmitting unit. The event receiving unit 119 is an example of a receiving unit. The style definition is an example of disposition information. The style extracting unit 116 is an example of an extracting unit. The data receiving unit 211 is an example of a receiving unit in relation to claims 9 and 10. The contents rendering unit 215 is an example of a display control unit. The event transmitting unit 216 is an example of a notifying unit. The event notification script sc1 is an example of command definition information.

While the embodiments of the present disclosure have been described above, the present disclosure is not limited to the above-described embodiments and various improvements and modifications are possible without departing from the spirit of the disclosure as described in the scope of the claims.

All examples and conditional language recited herein are intended for pedagogical purposes to aid the reader in understanding the invention and the concepts contributed by the inventor to furthering the art, and are to be construed as being without limitation to such specifically recited examples and conditions, nor does the organization of such examples in the specification relate to a showing of the superiority and inferiority of the invention. Although the embodiments of the present invention have been described in detail, it should be understood that the various changes, substitutions, and alterations could be made hereto without departing from the scope of the invention.

## Claims

1. An information processing terminal connectable to a display terminal through a network, the information processing terminal comprising:
a display control unit that, based on display data, causes the display terminal to display an image in which a display state is changed in response to a manipulation by a user;
a first creating unit that creates command definition information for causing the display terminal to notify the information processing terminal an occurrence of a manipulation on the image when the image is displayed by the display terminal; and
a transmitting unit that transmits, to the display terminal, the command definition information and data for indicating the display state of the image to be changed in response to the manipulation.

2. The information processing terminal according to claim 1 further comprising:
a receiving unit that receives a notification of the occurrence of the manipulation transmitted from the display terminal based on the command definition information in response to a manipulation of an image displayed, based on data for indicating the display state, by the display terminal; and
a changing unit that changes the display state of the image displayed by the display control unit in response to the reception by the receiving unit of the notification of the occurrence of the manipulation; wherein
the transmitting unit transmits, to the display terminal, data for indicating the display states after changed by the changing unit.

3. The information processing terminal according to claim 1 or 2 wherein:
the command definition information is described in a script.

4. The information processing terminal according to claim 1, 2 or 3 wherein:
the first creating unit creates command definition information for causing the display terminal to notify the information processing terminal a change of a playback state of a moving image when the moving image is displayed based on the display data by the display terminal.

5. The information processing terminal according to any preceding claim further comprising:
a second creating unit that matches a display size of the image in the display terminal and creates an image based on the display data; and
an extracting unit that extracts disposition information of a display element that configures the image from the image created by the second creating unit; wherein,
the transmitting unit transmits, to the display terminal, the command definition information, the data for indicating the display state of the image changed in response to the manipulation, and the disposition information.

6. The information processing terminal according to claim 5, wherein:
the display data includes at least a HTML file and a CSS file; and
the second creating unit matches the display size of the image in the display terminal and creates an image based on the display data when origins of the HTML file and the CSS file that configure the display data are different.

7. The information processing terminal according to any preceding claim, wherein:
a definition of a first processing to be executed by the information processing terminal in response to a manipulation on an image displayed based on the display data is included in the display data in an activated state, and a definition of a second processing to be executed by the display terminal in response to the manipulation is included in the display data in an invalidated state; and
the first creating unit invalidates the definition of the first processing, activates the definition of the second processing, and creates command definition information for causing the display terminal to notify the information processing terminal an occurrence of a manipulation on the image when the image is displayed by the display terminal.

8. An information processing terminal connectable to a display terminal through a network, the information processing terminal comprising:
a display control unit that, based on display data, causes the display terminal to display an image in which a display state is changed in response to a manipulation by a user;
a processing executing unit that executes processing in accordance with the manipulation on the image based on a definition of processing to be executed in response to the manipulation on the image, the definition being included in the display data; and
a transmitting unit that transmits, to the display terminal, the definition of the processing and data for indicating the display state of the image; wherein,
the display terminal notifies the information processing terminal about the occurrence of the manipulation in response to the manipulation on the image displayed in the display terminal based on data for indicating the display state due to the execution of processing different from processing executed by the information processing terminal in relation to a function invoked in the definition of the processing.

9. A display terminal comprising:
a receiving unit that receives, from the information processing terminal according to claim 1, the command definition information and the data for indicating the display state to be changed in response to the manipulation;
a display control unit that displays an image based on the data received by the receiving unit; and
a notifying unit that, in response to the manipulation on the image, notifies the information processing terminal about the occurrence of the manipulation based on the command definition information.

10. A display terminal comprising:
a receiving unit that receives, from the information processing terminal according to claim 8, the definition of the processing and the data for indicating the display state of the image displayed by the display control unit;
a display control unit caused to display an image based on the data received by the receiving unit; and
a notifying unit that, in response to the manipulation on the image displayed by the display control unit, notifies the information processing terminal about the occurrence of the manipulation due to the execution of processing different from processing executed by the information processing terminal in relation to a function invoked in the definition of the processing.

11. A display method for executing processing in which:
an information processing terminal connectable to a display terminal through a network
causes, based on display data, the display terminal to display an image in which a display state is changed in response to a manipulation by a user;
creates command definition information for causing the display terminal to notify the information processing terminal an occurrence of a manipulation on the image when the image is displayed by the display terminal; and
transmits, to the display terminal, the command definition information and data for indicating the display state of the displayed image to be changed in response to the manipulation.

12. A display method that executes processing in which
a display terminal
receives, from the information processing terminal according to claim 1, the command definition information and the data for indicating the display state to be changed in response to the manipulation;
displays an image based on the received data; and
notifies, in response to the manipulation on the image, the information processing terminal about the occurrence of the manipulation based on the command definition information.

13. A non-transitory storage medium storing a program that causes
an information processing terminal connectable to a display terminal through a network to:
cause, based on display data, the display terminal to display an image in which a display state is changed in response to a manipulation by a user;
create command definition information for causing the display terminal to notify the information processing terminal an occurrence of a manipulation on the image when the image is displayed by the display terminal; and
transmit, to the display terminal, the command definition information and data for indicating the display state of the displayed image changed in response to the manipulation.

14. A non-transitory storage medium storing a program for causing a display terminal to:
receive, from the information processing terminal according to claim 1, the command definition information and data for indicating the display state to be changed in response to the manipulation;
display an image based on the received data; and
notify, in response to a manipulation on the image, the information processing terminal about the occurrence of the manipulation based on the command definition information.
